(19) **Europäisches Patentamt / European Patent Office / Office européen des brevets**

(11) **EP 1 520 370 B1**

(12) **FASCICULE DE BREVET EUROPEEN**

(45) Date de publication et mention
de la délivrance du brevet:
**07.01.2009 Bulletin 2009/02**

(51) Int Cl.:
**H04L 9/32** *(2006.01)*

(21) Numéro de dépôt: **03750783.7**

(86) Numéro de dépôt international:
**PCT/FR2003/002000**

(22) Date de dépôt: **27.06.2003**

(87) Numéro de publication internationale:
**WO 2004/006497 (15.01.2004 Gazette 2004/03)**

(54) **PROCÉDÉ ET DISPOSITIFS CRYPTOGRAPHIQUES PERMETTANT D'ALLEGER LES CALCULS AU COURS DE TRANSACTIONS**

KRYPTOGRAPHISCHES VERFAHREN UND EINRICHTUNGEN ZUR ERMÖGLICHUNG VON BERECHNUNGEN WÄHREND TRANSAKTIONEN

CRYPTOGRAPHIC METHOD AND DEVICES FOR FACILITATING CALCULATIONS DURING TRANSACTIONS

(84) Etats contractants désignés:
**AT BE BG CH CY CZ DE DK EE ES FI FR GB GR HU IE IT LI LU MC NL PT RO SE SI SK TR**

(30) Priorité: **05.07.2002 FR 0208474**

(43) Date de publication de la demande:
**06.04.2005 Bulletin 2005/14**

(73) Titulaire: **FRANCE TELECOM
75015 Paris (FR)**

(72) Inventeurs:
• **GIRAULT, Marc
F-14000 Caen (FR)**
• **PAILLES, Jean-Claude
F-14610 Epron (FR)**

(74) Mandataire: **Verdure, Stéphane et al
Cabinet Plasseraud
52 rue de la Victoire
75440 Paris Cedex 09 (FR)**

(56) Documents cités:
**FR-A- 2 718 311          US-A- 4 995 082**

• **SCHNORR C P: "EFFICIENT IDENTIFICATION AND SIGNATURES FOR SMART CARDS" LECTURE NOTES IN COMPUTER SCIENCE, SPRINGER VERLAG, NEW YORK, NY, US, 20 août 1989 (1989-08-20), pages 239-252, XP002052048 ISSN: 0302-9743**

**Description**

L'invention relève du domaine technique de la cryptographie, et plus précisément de la cryptographie dite à clé publique. Dans ce type de cryptographie, un utilisateur détient une paire de clés pour un usage donné. Ladite paire de clés est constituée d'une clé privée que cet utilisateur maintient secrète et d'une clé publique associée que cet utilisateur peut communiquer à d'autres utilisateurs. Par exemple, s'il s'agit d'une paire due clés dédiée à la confidentialité, alors la clé publique est utilisée pour chiffrer les données, tandis que la clé secrète est utilisée pour les déchiffrer, c'est-à-dire pour rétablir ces données en clair.

La cryptographie à clé publique est d'une très grande utilité dans la mesure où, contrairement à la cryptographie à clé secrète, elle n'exige pas que les interlocuteurs partagent un même secret afin d'établir une, communication sécurisée. Cependant, cet avantage en termes de sécurité s'accompagne d'un désavantage en termes de performance, car les procédés de cryptographie à clé publique, appelés encore « schémas à clé publique », sont souvent cent ou mille fois plus lents que les procédés de cryptographie à clé secrète appelés encore « schémas à clé secrète ». C'est donc un défi très important que de trouver des procédés de cryptographie à clé publique d'exécution rapide, de façon à pouvoir les mettre en oeuvre dans des environnements peu dotés en ressources, tels que les cartes à microprocesseur standards, avec ou sans contacts.

La plupart des schémas à clé publique actuellement existants reposent sur la difficulté de problèmes mathématiques issus du domaine de l'arithmétique (ou « théorie des nombres »). C'est ainsi que la sécurité du schéma de chiffrement et de signature numérique RSA (R.L. Rivest, A. Shamir et L. Adleman "A Method for Obtaining Digital Signatures and Public-Key Cryptosystems, Communication of ACM, Vol.21, 1978, pp. 120-126) repose sur la difficulté du problème de la factorisation des nombres entiers : étant donné un très grand nombre entier (plus de 1000 bits) obtenu de façon privée en multipliant deux ou plusieurs facteurs premiers de tailles comparables, il n'existe pas aujourd'hui de méthode efficace pour retrouver ces facteurs premiers.

D'autres schémas à clé publique, tels que le schéma de signature numérique décrit dans la demande de brevet FR-A-2716058, font reposer leur sécurité sur la difficulté du problème dit du logarithme discret. Ce problème peut être énoncé dans sa plus grande généralité de la façon suivante : soit E un ensemble muni d'une opération (c'est-à-dire d'une fonction qui, à deux éléments a et b, associe un élément noté « a.b » ou « ab », et appelé produit de a et b), g un élément de E, r un grand nombre entier et y le nombre entier défini par: $y = g^r$ (c'est-à-dire le produit g.g....g avec r occurrences de g) ; alors il est infaisable de retrouver r à partir de g et y. Souvent, l'ensemble E utilisé est l'ensemble des entiers module n où n est un nombre entier, premier ou composé de nombres premiers.

Le domaine de l'invention est plus particulièrement le domaine technique de l'authentification d'entité, encore appelée identification, ainsi que celui de l'authentification de message et de la signature numérique de message, au moyen de techniques cryptographiques à clé publique. Dans de tels procédés, l'entité authentifiée appelée prouveur, possède une clé privée qui est secrète et une clé publique associée. Le prouveur utilise la clé privée pour produire une valeur d'authentification ou une signature numérique. L'entité qui authentifie, appelée vérificateur, a uniquement besoin de la clé publique du prouveur pour vérifier la valeur d'authentification ou la signature numérique.

Le domaine de l'invention est plus particulièrement encore celui des procédés d'authentification dits à divulgation de connaissance nulle ou sans apport de connaissance (« zero-knowledge »). Cela signifie que l'authentification se déroule suivant un protocole qui, de façon prouvée, ne révèle rien sur la clé secrète de l'entité authentifiée, et ce quel que soit le nombre d'utilisations. On sait, à l'aide de techniques standards, déduire de ce type de schémas des schémas d'authentification de message et de signature numérique de message.

Le domaine de l'invention est plus particulièrement encore celui des procédés dont la sécurité repose à la fois sur la difficulté du problème de la factorisation des nombres entiers et sur la difficulté du problème du logarithme discret.

L'article « Efficient Identification and Signatures for Smart Cards » de C.P. Schnorr, publié dans les « Lecture Notes in Computer Science », Springer Verlan, New York, pages 239-252, ISSN : 0302-9743 décrit un procédé d'authentification à divulgation de connaissance nulle dans un système de clé publique classique: une entité A, munie des clés privée s et publique v et disposant d'un nombre $\alpha$ connu dans le système, transmet un premier élément de preuve $x=\alpha^r$ (module p), avec un nombre r aléatoire, et un deuxième élément de preuve y=rise (modulo q) , avec un nombre c choisi, à une deuxième entité B qui vérifie si $x=\alpha^{y*}v^c$ (modulo p), où p est un entier premier et q un diviseur premier de (p-1), et $\alpha^r$ est congru à 1 (modulo p).

L'invention trouve une application dans tous les systèmes ayant recours à la cryptographie à clé publique -pour sécuriser leurs éléments et/ou leurs transactions, et plus particulièrement dans les systèmes où le nombre de calculs effectués par les différentes parties constitue pour au moins l'une d'entre elles un paramètre critique, soit parce qu'elle ne dispose pas d'un coprocesseur spécialisé dans les calculs cryptographiques, appelé souvent cryptoprocesseur, afin de les accélérer, soit parce qu'elle est susceptible d'effectuer un grand nombre de calculs simultanément par exemple dans le cas d'un serveur central, soit pour toute autre raison.

Une application typique est le paiement électronique, par carte bancaire ou par porte-monnaie électronique. Dans le cas du paiement de proximité, le terminal de paiement se trouve dans un lieu public, ce qui incite à utiliser des procédés de cryptographie à clé publique, afin qu'il ne stocke aucune clé-maître. Afin de réduire les coûts globaux d'un tel système, on peut souhaiter, soit que la carte soit une carte à microprocesseur standard c'est-à-dire que la carte n'est pas dotée d'un cryptoprocesseur, soit que le microprocesseur sécurisé contenu dans le terminal soit lui-même de type standard, soit les deux. Selon les cas, et selon le procédé cryptographique retenu, l'état de la technique actuellement connue permet d'atteindre l'un ou l'autre de ces objectifs, mais permet difficilement d'atteindre les deux simultanément, en respectant les contraintes du système. Un exemple de telle contrainte est que le paiement s'effectue en moins d'une seconde, voire en moins de 150 millisecondes dans le cas d'une transaction sans contact, voire encore en quelques millisecondes dans le cas d'un péage d'autoroute.

Le procédé cryptographique le plus utilisé à l'heure actuelle est le procédé RSA. Il est basé sur le problème de la factorisation. Cet algorithme, normalisé dans diverses instances, est devenu un standard de facto. Il est appelé à rester l'algorithme prépondérant dans les années à venir. De nombreux produits, systèmes et infrastructures telles que les infrastructures à clé publique PKI (acronyme de Public Key Infrastructure en anglais), ont été conçus à partir de cet algorithme et des formats de clés qu'il utilise.

De façon connue selon cet algorithme, la clé publique est constituée d'un couple de nombre entiers (n,e) et la clé privée est constituée d'un nombre entier d. Le module n est un nombre entier suffisamment grand pour que sa factorisation soit infaisable. Une entité A qui, seule, détient la clé privée d, est la seule entité capable de générer un nombre entier W' égal à une puissance du nombre entier W modulo n avec d comme exposant, de façon à permettre à toute entité B connaissant la clé publique (n,e), de retrouver le nombre entier W en élevant le nombre entier W' à une puissance modulo n avec e comme exposant.

Dans un procédé de signature de message M, le nombre entier W est généralement une image du message par une fonction telle qu'une fonction de hachage connue. Le prouveur est l'entité A, la signature est le nombre entier W', le vérificateur est l'entité B qui vérifie que le nombre entier retrouvé à partir de la signature W', est l'image du message par la fonction connue.

Dans un procédé d'identification, le nombre entier W constitue généralement un défi envoyé par l'entité B qui est le vérificateur. Le nombre W' généré par l'entité A qui est le prouveur, constitue la réponse à ce défi.

Dans un procédé d'authentification de message M, le nombre entier W résulte généralement d'une combinaison d'image-du message M et d'un défi envoyé par le vérificateur constitué par l'entité B. Le nombre W' généré par l'entité A qui est le prouveur, constitue une signature authentique en réponse à ce défi.

L'algorithme RSA présente toutefois un problème qui résulte d'une quantité élevée d'opérations à effectuer par le prouveur ou le signataire. Pour réaliser un calcul complet en moins d'une seconde sur une carte à microprocesseur qui effectue ces opérations, il est nécessaire d'ajouter un cryptoprocesseur sur la carte. Cependant, la fabrication et l'installation d'un cryptoprocesseur, ont un coût non négligeable qui augmente le prix de la carte à microprocesseur. On sait aussi qu'un cryptoprocesseur consomme beaucoup de courant. L'alimentation de la carte par le terminal peut poser des difficultés techniques en cas d'interface sans contact. On sait encore que l'ajout d'un cryptoprocesseur facilite des attaques physiques par analyse du spectre de courant consommé, ce qui présente un inconvénient auquel il est difficile de trouver des solutions techniques. Par ailleurs, même si la carte est dotée d'un cryptoprocesseur, le calcul peut encore s'avérer trop lent dans des applications où le temps de transaction nécessite d'être très court comme dans certains des exemples précédemment cités.

La présente invention a pour objet de spécifier des procédés cryptographiques à clé publique tels que les procédés d'authentification et de signature numérique. Plus précisément, la présente invention a pour objet d'utiliser les mêmes clés que l'algorithme RSA avec un niveau de sécurité au moins égal à celui de cet algorithme, tout en permettant d'effectuer une grande majorité de calculs à l'avance qui évite de devoir utiliser un cryptoprocesseur.

Considérant un procédé cryptographique utilisable dans une transaction pour laquelle une première entité génère au moyen d'une clé privée de type RSA, une preuve vérifiable par une deuxième entité au moyen d'une clé publique de type RSA associée à ladite clé privée, ladite clé publique comprenant un exposant de clé publique et un module, le procédé selon l'invention est remarquable en ce que :

- la première entité génère un premier élément de preuve dont un premier calcul à forte consommation de ressources est exécutable indépendamment de la transaction,
- la première entité génère un deuxième élément de preuve lié au premier élément de preuve et qui dépend d'un nombre commun partagé par la première et la deuxième entité spécifiquement pour la transaction, dont un deuxième calcul est à faible consommation de ressources,
- la deuxième entité vérifie que le premier élément de preuve est lié par une relation avec une première puissance modulo le module, d'un nombre générique commun élevé à la puissance d'un deuxième explosant égal à une combinaison linéaire de tout ou partie du nombre commun et d'un produit de l'exposant de clé publique par le deuxième élément de preuve.

Le fait que les clés soient de type RSA, a pour avantage de pouvoir utiliser sans modification de nombreux produits, développements ou infrastructures existants, tels que des logiciels de production de clés, des descriptions de zones mémoires de microprocesseurs, des formats de certificats de clés publiques, etc.

Le premier élément de preuve étant calculable en tout ou partie indépendamment de la transaction, la première entité a la possibilité d'effectuer un calcul complexe préalablement à la transaction, en gardant secrète l'exécution de ce calcul complexe pour garantir la sécurité. Ainsi, on observe qu'une première entité génère rapidement un tel premier élément de preuve dès le début de la transaction sans faire appel à des ressources puissantes telles que celles d'un cryptoprocesseur. Seule la première entité est alors capable de générer le deuxième élément de preuve en le liant au premier élément de preuve de façon à faire dépendre par des opérations simples, le deuxième élément de preuve d'un nombre commun spécifiquement partagé par la transaction. L'exécution possible de ces opérations simples en temps réduit par la première entité, évite de ralentir la transaction tout en gardant un bon niveau de sécurité.

De façon non limitative, la transaction peut avoir pour objet d'identifier la première entité, de signer un message ou d'authentifier un message.

Particulièrement pour permettre d'identifier la première entité:

- le premier élément de preuve est généré par la première entité en élevant le nombre générique à une deuxième puissance modulo le module d'un deuxième exposant combinaison linéaire de nombre commun et du produit de l'exposant de clé publique par un nombre entier aléatoire gardé secret par la première entité,
- le nombre commun est choisi au hasard dans un intervalle de sécurité puis émis par la deuxième entité après avoir reçu le premier élément de preuve,
- la relation vérifiée par la deuxième entité, est une relation d'égalité entre une puissance du premier élément de preuve et la première puissance du nombre générique.

Le calcul complexe dont l'exécution est gardée secrète, porte ici sur l'élévation à la deuxième puissance du nombre générique pour générer le premier élément de preuve. Le choix au hasard du nombre commun pendant la transaction, ne nuit pas à la rapidité de cette transaction.

Particulièrement pour permettre de signer un message:

- le premier élément de preuve est généré par la première entité en appliquant une fonction de hachage standard au message et au nombre générique élevé à une deuxième puissance modulo le module ayant un troisième exposant égal à un produit de l'exposant de clé publique par un nombre entier aléatoire gardé secret par la première entité,
- le nombre commun est égal au premier élément de preuve,
- la relation vérifiée par la deuxième entité, est une relation d'égalité entre le nombre commun et un résultat de la fonction de hachage standard appliquée au message et à la première puissance du nombre générique.

Le calcul complexe à exécution gardée secrète, porte ici sur l'élévation à la deuxième puissance du nombre générique pour générer un potentiel de preuve. L'application de la fonction de hachage standard au message et à ce potentiel de preuve, n'est plus à forte consommation de ressources. La première entité peut ici calculer le potentiel de preuve avant la transaction dans laquelle une transmission du deuxième élément de preuve et du premier élément de preuve égal au nombre commun partagé avec la deuxième entité, constitue alors une transmission de signature du message.

Particulièrement pour permettre d'authentifier qu'un message reçu par la deuxième entité provient de la première entité:

- le premier élément de preuve est généré par la première entité en appliquant une fonction de hachage standard au message et au nombre générique élevé à une deuxième puissance modulo le module ayant un troisième exposant égal à un produit de l'exposant de clé publique par un nombre entier aléatoire gardé secret par la première entité,
- le nombre commun est choisi au hasard dans un intervalle de sécurité puis émis par la deuxième entité après avoir reçu le premier élément de preuve,
- la relation vérifiée par la deuxième entité, est une relation d'égalité entre le premier élément de preuve et un résultat de la fonction de hachage standard appliquée au message et à la première puissance du nombre générique.

Le calcul complexe gardé secret, porte ici sur l'élévation à la deuxième puissance du nombre générique pour générer le premier élément de preuve. Le choix au hasard du nombre commun pendant la transaction par la deuxième entité, ne nuit pas à la rapidité de cette transaction.

De façon générale, le calcul complexe réalisable avant la transaction, ne fait pas intervenir directement la clé privée et son résultat ne donne donc aucune information sur la clé privée.

Plus particulièrement, le procédé cryptographique est remarquable en ce que:

- le deuxième élément de preuve est généré par la première entité en retranchant du nombre entier aléatoire, la clé privée multipliée par le nombre commun,
- la combinaison linéaire égale au deuxième exposant comprend un coefficient unitaire positif pour le nombre commun et un coefficient unitaire positif pour le produit de l'exposant de clé publique par le deuxième élément de preuve,
- dans la relation vérifiée, le premier élément de preuve est considéré avec une puissance d'exposant unitaire.

Alternativement et préférentiellement lorsque le nombre commun est choisi par la deuxième entité, le procédé cryptographique est remarquable en ce que:

- le nombre commun étant scindé en un premier nombre commun élémentaire et un deuxième nombre commun élémentaire, le deuxième élément de preuve est généré par la première entité en retranchant du nombre entier aléatoire multiplié par le premier nombre commun élémentaire, la clé privée multipliée par le deuxième nombre commun élémentaire,
- la combinaison linéaire égale au deuxième exposant comprend un coefficient nul pour le premier nombre commun élémentaire, un coefficient unitaire positif pour le deuxième nombre commun élémentaire et un coefficient unitaire positif pour le produit de l'exposant de clé publique par le deuxième élément de preuve,
- dans la relation vérifiée, le premier élément de preuve est considéré avec une puissance d'exposant égal au premier nombre commun élémentaire.

Les opérations simples de soustraction et de multiplication, ci-dessus décrites, permettent de calculer rapidement le deuxième élément de preuve au sein d'une transaction et de réitérer plusieurs fois la transaction en générant à chaque fois un deuxième élément de preuve lié à un autre premier élément de preuve par un nombre aléatoire différent, sans donner aucune information sur la clé privée.

Avantageusement, le procédé cryptographique est remarquable en ce que le deuxième élément de preuve est calculé modulo une image du module par une fonction de Carmichaël ou modulo un multiple de l'ordre du nombre générique modulo le module.

Le nombre entier aléatoire peut être choisi très supérieur à la clé privée. Dans le cas où l'avantage mentionné au paragraphe précédent n'est pas mis en oeuvre, il est nécessaire que le nombre entier aléatoire soit très supérieur à la valeur de clé privée. Avantageusement pour réduire la quantité d'opérations nécessaires à l'élévation de puissance ayant le nombre aléatoire pour exposant, le nombre entier aléatoire est inférieur à une image du module par une fonction de Carmichaël ou à un multiple de l'ordre du nombre générique modulo le module. Un tel nombre aléatoire ne peut donner aucune information exploitable sur la clé privée.

La réduction de taille du deuxième élément de preuve ainsi obtenue, permet d'accélérer les calculs à effectuer par la deuxième entité sans nuire à la sécurité.

Avantageusement encore, le procédé cryptographique est remarquable en ce que le troisième exposant est calculé modulo une image du module par une fonction de Carmichaël ou modulo un multiple de l'ordre du nombre générique modulo le module.

La réduction de taille du troisième exposant, ainsi obtenue, permet d'accélérer les calculs à effectuer par la première entité sans nuire à la sécurité.

Une valeur deux attribuée au nombre générique facilite les élévations à toute puissance du nombre générique. Une petite valeur peut aussi être attribuée au nombre générique qui permet de distinguer chaque première entité en appliquant une fonction de hachage connue au module et au premier exposant de la clé publique.

Une amélioration remarquable du procédé cryptographique pour distinguer la première entité, consiste en ce que le nombre générique est transmis avec la clé publique, le nombre générique étant égal à un nombre simple élevé à une puissance modulo le module avec pour exposant la clé privée.

Il suffit alors à la première entité d'élever le nombre simple à une puissance modulo le module avec pour exposant le nombre aléatoire de façon à obtenir le même résultat qu'en élevant le nombre générique à une deuxième puissance modulo le module ayant un troisième exposant égal à un produit de l'exposant de clé publique par un nombre entier aléatoire. Une attribution de la valeur deux au nombre simple, accélère considérablement le calcul complexe, que celui-ci soit fait avant ou pendant la transaction.

Une amélioration remarquable encore du procédé cryptographique, consiste en ce que:

- une troisième entité reçoit le deuxième élément de preuve, génère un troisième élément de preuve en élevant le nombre générique à une puissance modulo le module avec pour exposant le deuxième élément de preuve et envoie le troisième élément de preuve à la deuxième entité;
- la deuxième entité élève le troisième élément de preuve à une puissance modulo le module avec l'exposant de clé publique et en multiplie le résultat par le nombre générique élevé à une puissance d'exposant le nombre commun pour vérifier la relation qui lie le premier élément de preuve.

La troisième entité permet de soulager la deuxième entité sans nuire à l'intégrité de la vérification.

Considérant un dispositif prouveur protégé contre toute intrusion et muni d'une clé privée de type RSA gardée secrète, pour générer lors d'une transaction avec un dispositif vérificateur, une preuve dont une vérification à l'aide d'une clé publique associée à ladite clé privée permet de garantir que le dispositif prouveur est à l'origine de ladite preuve, ladite clé publique de type RSA comprenant un premier exposant et un module, le dispositif prouveur selon l'invention est remarquable en ce qu'il comprend:

- des moyens de calcul agencés pour générer un premier élément de preuve dont un premier calcul à forte consommation de ressources est exécutable indépendamment de la transaction et pour générer un deuxième élément de preuve lié au premier élément de preuve et qui dépend d'un nombre commun spécifique à la transaction;
- des moyens de communication agencés pour émettre au moins le premier et le deuxième élément de preuve et agencés pour émettre vers

ou recevoir du dispositif vérificateur ledit nombre commun.

Particulièrement, le dispositif prouveur selon l'invention, est remarquable en ce que:

- les moyens de calcul sont d'une part agencés pour générer un premier nombre aléatoire et pour élever un nombre générique à une puissance modulo le module ayant un exposant égal à un produit de l'exposant de clé publique par le nombre entier aléatoire,
- les moyens de calcul sont d'autre part agencés pour générer le deuxième élément de preuve par différence entre le nombre entier aléatoire et la clé privée multipliée par le nombre commun.

Alternativement, les moyens de calcul sont agencés pour effectuer des opérations modulo une image du module par une fonction de Carmichaël ou modulo un multiple de l'ordre du nombre générique modulo le module.

Considérant un dispositif vérificateur pour vérifier qu'une preuve est issue d'un dispositif prouveur muni d'une clé privée de type RSA gardée secrète par le dispositif prouveur, à l'aide d'une clé publique associée à ladite clé privée, ladite clé publique de type RSA comprenant un exposant et un module, le dispositif vérificateur selon invention est remarquable en ce qu'il comprend:

- des moyens de communication agencés pour recevoir un premier élément de preuve et un deuxième élément de preuve ou un troisième élément de preuve, et pour recevoir ou émettre un nombre commun spécifique à une transaction au sein de laquelle sont reçus le premier et le deuxième ou le troisième élément de preuve,
- des moyens de calcul agencés pour vérifier que le premier élément de preuve est lié par une relation avec une première puissance modulo le module, d'un nombre générique ayant un deuxième exposant égal à une combinaison linéaire du nombre commun et d'un produit de l'exposant de clé publique par le deuxième élément de preuve.

Particulièrement, le dispositif vérificateur est remarquable en ce que les moyens de communication sont agencés pour recevoir le deuxième élément de preuve et en ce que les moyens de calcul sont agencés pour calculer le deuxième exposant et ladite première puissance du nombre générique.

Alternativement, le dispositif vérificateur est remarquable en ce que les moyens de communication sont agencés pour recevoir le troisième élément de preuve et en ce que les moyens de calculs sont agencés pour élever le troisième élément de preuve à une puissance de l'exposant de clé publique et pour en multiplier le résultat par le nombre générique élevé à une deuxième puissance ayant pour exposant le nombre commun.

L'invention sera mieux comprise dans les exemples de mise en oeuvre dont la description suit en référence aux dessins annexés dans lesquels:

- la figure 1 montre des étapes de procédé conforme à l'invention, pour identifier une première entité,
- la figure 2 montre des étapes de procédé conforme à l'invention, pour signer un message,
- la figure 3 montre des étapes de procédé conforme à invention, pour authentifier un message,
- la figure 4 montre une première variante du procédé d'authentification pour faciliter de nombreuses transactions,
- la figure 5 montre une deuxième variante du procédé d'authentification faisant intervenir une entité intermédiaire.

Le mode de réalisation décrit à présent, est un procédé d'authentification d'entité ou d'identification. Il permet à un prouveur A de convaincre un vérificateur B de son authenticité. Ce procédé peut être transformé en procédé d'authentification de message ou signature numérique de message comme expliqué par la suite. Sa sécurité repose sur la difficulté de factoriser de grands nombres entiers. Cette difficulté est connue de l'homme du métier comme étant au moins aussi grande que la difficulté du problème sur lequel repose la sécurité de l'algorithme RSA. Dans une option qui permet d'alléger la tâche de vérification, la sécurité du procédé est équivalente à celle de RSA.

On rappelle qu'un nombre premier (prime number en anglais), est un nombre divisible uniquement par un et par lui-même. On rappelle aussi que la fonction d'Euler $\varphi(z)$ d'un nombre entier positif quelconque z, donne le nombre cardinal de l'ensemble des nombres entiers positifs inférieurs à z et premiers (coprime to en anglais) avec z, c'est à dire n'ayant aucun facteur commun avec z, différent de 1. On rappelle encore que la fonction de Carmichaël $\lambda(w)$ d'un nombre entier positif quelconque w, donne le plus petit nombre entier strictement positif v tel que tout nombre entier u vérifie la relation $\{u^v = 1$ modulo $w\}$, c'est à dire que de façon connue, le reste de la division entière de $u^v$ par w est égal à 1.

Conformément à l'objectif et aux résultats explicités ci-dessus, ce procédé utilise des clés de type RSA. De façon à constituer un dispositif prouveur, une première entité A possède d'une part une clé publique divulguée à toute deuxième entité B qui constitue un dispositif vérificateur. La première entité A possède d'autre part une clé privée conservée secrète. La clé publique comprend un module n et un exposant de clé publique e. La clé privée comprend un deuxième exposant d. Le module n est un nombre entier égal au produit de deux ou plusieurs nombres premiers. Lorsque le nombre n est un produit de deux nombres premiers p et q, $\varphi(n)=(p-1)(q-1)$. De nombreuses descriptions de RSA spécifient que le module n, le premier exposant e et le deuxième exposant d, respectent la relation $\{e \cdot d = 1$ modulo $\varphi(n)\}$. Il est bien connu de l'homme du métier que lorsque la relation $\{e \cdot d = 1$ modulo $\varphi(n)\}$ est respectée, alors la relation $\{e \cdot d = 1$ modulo $\lambda(n)\}$ est respectée.

Plus généralement, le procédé fonctionne avec le même niveau de sécurité pour toute clé publique (n,e) associée à une clé privée d qui respecte la relation $\{e \cdot d = 1$ modulo $\lambda(n)\}$.

Dans toutes les options, on suppose que le vérificateur B connaît déjà tous les paramètres publics nécessaires à vérifier qu'une preuve est donnée par une première entité, le prouveur A, à savoir son identité, sa clé publique, son certificat de clé publique, etc.

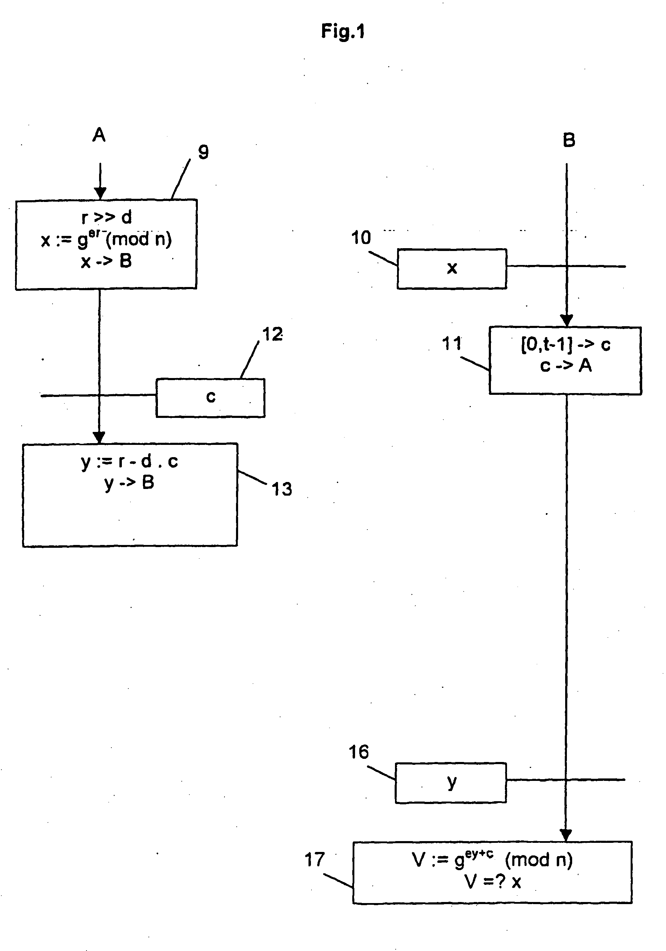

L'identification de l'entité A par l'entité B se déroule en itérant k fois le protocole à présent décrit en référence à la figure 1. Le nombre k est un entier positif qui, avec un nombre entier t inférieur ou égal à l'exposant e, définit un couple de paramètres de sécurité.

Dans une première étape 9, l'entité A génère un premier nombre entier aléatoire *r* très supérieur à *d*, calcule $x = g^{e \cdot r}$ (mod *n*) et envoie x à l'entité B. De façon connue, les entités A et B sont de type ordinateur ou carte à puce. Le nombre entier g est un nombre générique connu par les entités A et B. Une valeur du nombre générique g, égale à 2, facilite ses élévations de puissance. Le nombre générique g peut aussi être fonction de la clé publique du prouveur, par exemple g=h(n,e) où h est une fonction de hachage connue de tous. Le nombre générique g peut aussi être déterminé par l'entité A et alors transmis avec sa clé publique. Par exemple, l'entité A élève un nombre simple G à la puissance d dont le résultat donne le nombre g tel que $g^e$ (mod *n*) = G. Le nombre générique g étant calculé une fois pour toutes par l'entité A, le calcul de x est simplifié car alors, $x = G^r$ (mod *n*). Une valeur du nombre simple G égale à 2, facilitant ses élévations de puissance, est plus particulièrement avantageuse. L'expression (mod n) signifie modulo n, c'est à dire que de façon connue, le résultat du calcul est égal au reste de la division entière du résultat de l'opération considérée, par le nombre entier n, généralement appelé module. Ici, le nombre entier x constitue un premier élément de preuve car seule l'entité qui génère le nombre aléatoire r, est capable de générer le nombre x. Le nombre aléatoire r n'est pas communiqué par l'entité qui le génère.- Selon- la théorie- connue des nombres, le nombre r est choisi suffisamment grand pour qu'une connaissance du nombre générique g ou du nombre simple G et du module n, ne permette pas de retrouver le nombre r à partir du nombre x.

Une réception par l'entité B du premier élément de preuve x, valide une transition 10 qui active alors une deuxième étape 11.

Dans l'étape 11, l'entité B envoie-à l'entité A, un nombre entier c choisi au hasard dans un intervalle [0,t - 1] dit de sécurité. Ainsi, le nombre c est commun aux entités A et B et aussi à toute autre entité s'infiltrant dans le dialogue entre les entités A et B.

Une réception par l'entité A du nombre commun c, valide une transition 12 qui active alors une troisième étape 13.

Dans l'étape 13, l'entité A calcule y = r - d·c. Ainsi, l'entité A génère une image y de la clé privée sous forme de combinaison linéaire du nombre r et du nombre, d dont le coefficient multiplicatif est le nombre commun c. Le nombre aléatoire r étant très grand et non communiqué, une connaissance de l'image y ne permet pas de retrouver le produit de et par conséquent, ne permet pas de retrouver le nombre d de clé privée qui reste donc gardé secret par l'entité A. Seule l'entité A ayant connaissance du nombre d, seule l'entité A peut générer une image qui intègre le nombre commun c.

Considérant les protocoles ici décrits, un imposteur est une entité qui tente de se faire passer pour l'entité A sans connaître le secret de la clé privée d. On sait démontrer que, lorsque la factorisation des entiers est un problème difficile, la probabilité que l'imposteur ne soit pas détecté, est égale à 1/kt. La sécurité de ces protocoles est donc au moins aussi grande que celle de RSA. Pour beaucoup d'applications, le produit kt peut être choisi relativement petit dans un contexte d'authentification, par exemple de l'ordre de $2^{16}$.

Toutes valeurs de k et t du couple de paramètres de sécurité, sont possibles. Préférentiellement, k=1 et t=e, auquel cas la probabilité définie ci-dessus est égale à 1/e et il n'y a qu'une équation de vérification à appliquer. Une valeur standard d'exposant public RSA telle que e=65537 soit $2^{16}+1$, convient pour-beaucoup d'applications.

Une réception par l'entité B du deuxième élément de preuve y, valide une transition 16 qui active alors une quatrième étape 17.

Dans l'étape 17, l'entité B vérifie que : $g^{e \cdot y+c} = x \pmod{n}$. Bien que, comme vu précédemment, le deuxième élément de preuve ne communique aucune information sur la clé privée d, le deuxième élément de preuve y est tel que:

$$e \cdot y + c = e \cdot (r - d \cdot c) + c$$

Donc en élevant le nombre générique g à une puissance dont l'exposant est une combinaison linéaire du nombre commun c et du produit e·y:

$$g^{e \cdot y+c} = g^{e \cdot r} \cdot (g^{-e \cdot d+1})^c = x \pmod{n}.$$

D'autre part, bien que conformément à la théorie des nombres, le nombre générique g ne communique aucune information sur la clé privée, celui-ci est en fait tel que:

$$(g^{d \cdot c})^e = g^c \pmod{n}.$$

Ainsi, sans communiquer r à aucun moment, l'égalité:

$$(g^y)^e \cdot g^c = (g^r)^e = x \pmod{n}$$

certifie que l'entité A connaît d.

Cette vérification est accélérée en calculant à l'avance, à la fin de l'étape 11 ou même avant:

$$v' = g^c \pmod{n}.$$

Ainsi dans la quatrième étape, B n'a plus qu'à vérifier : $g^{e \cdot y} \cdot v' = x \pmod{n}$. Lorsque B reçoit y, il est avantageux pour B de calculer une fois pour toutes $G = g^e \pmod{n}$, de façon à vérifier en étape 11, $G^y \cdot v' = x \pmod{n}$. D'autres optimisations possibles du calcul de vérification seront vues dans la suite de la description.

De nombreuses optimisations de ce protocole de base sont possibles. Par exemple, on peut remplacer $x=g^{e \cdot r}$ ( mod n) par $x=g^{-e \cdot r}$ ( mod n), auquel cas l'équation de vérification devient $g^{e \cdot y+c} \cdot x = 1 \pmod{n}$ ;

Par exemple encore, on peut remplacer c par un couple d'entiers positifs ou négatif (a,b) et y = r - d·c par y = -a·r - b·d, auquel cas l'équation de vérification devient $g^{e \cdot y+b} = x^a \pmod{n}$.

Si les facteurs premiers du module n sont connus de A, alors la première étape peut être accélérée en utilisant la technique dite des restes chinois.

La première étape peut être effectuée à l'avance. De plus les k valeurs de x peuvent faire partie de la clé publique de A, auquel cas le protocole commence directement à la deuxième étape. Ces valeurs de x peuvent aussi être calculées par une entité extérieure digne de confiance et stockées dans l'entité A.

Lorsque les valeurs pré-calculées de premier élément de preuve sont jointes à la clé publique, le protocole au sein d'une transaction commence directement par l'étape 11. C'est l'entité B qui décide de la quantité k d'itérations des étapes 11 et 13 pour chacune desquelles l'entité B vérifie en étape 17, qu'il existe une valeur de premier élément de preuve x qui est égale à V. L'entité A est toujours la seule à connaître les nombres aléatoires qui correspondent à un premier élément de preuve.

Afin de pouvoir stocker un maximum de valeurs pré-calculées dans une mémoire de l'entité A, particulièrement lorsque l'entité A est intégrée dans un micro-circuit de carte à puce pour carte de crédit ou pour téléphone mobile, le nombre x peut être remplacé par une valeur f(x) où f est une fonction, par exemple égale à (ou incluant) une fonction de hachage cryptographique, auquel cas l'équation de vérification devient : $f(g^{e \cdot y+c} \pmod{n}) = f(x)$.

On peut combiner tout ou partie des modifications précédentes.

Une amélioration intéressante du procédé, consiste à stocker une image $\lambda(n)$ du module n par la fonction de Carmichaël dans la mémoire de l'entité A.

De façon à réduire la taille du deuxième élément de preuve y pour diminuer le temps de vérification sans pour autant modifier l'équation de vérification, le deuxième élément de preuve y est calculé modulo $\lambda(n)$ dans l'étape 13. Dans cette réalisation, le nombre aléatoire r est avantageusement choisi inférieur à $\lambda(n)$ dans l'étape 11. Plus généralement, on peut remplacer l'expression {y=r- d·c} par toute expression {y=r - d·c -i·λ(n)} où i est un entier quelconque, de préférence positif.

De façon à accélérer une exécution de l'étape 11, préalablement à l'opération d'exponentielle appliquée au nombre générique g, le produit e.r est calculé modulo λ(n).

Un moyen équivalent consiste à remplacer λ(n) par l'ordre de g modulo n, c'est à dire le plus petit entier $\ell$ non nul tel que $g^\ell = 1$ modulo n, ou plus généralement par n'importe quel multiple de cet ordre $\ell$.

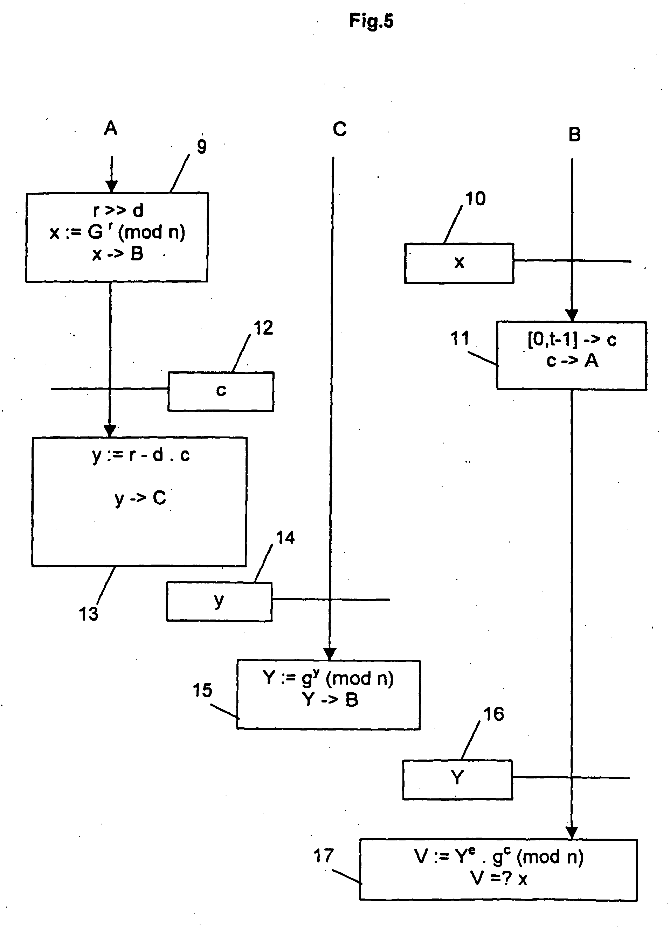

En référence à la figure 5, le calcul de vérification exécuté par l'entité B peut également être partiellement délégué à toute autre entité que B, et ce sans perte de sécurité. Dans ce cas A fournit le deuxième élément de preuve y à cette autre entité C. L'entité C génère un troisième élément de preuve Y à partir du deuxième élément de preuve y et envoie le troisième élément de preuve Y à l'entité B. D'une part, la connaissance de y ne fournit aucune information sur d, puisque le produit d·c est « masqué » par le nombre aléatoire r. D'autre part, il est pratiquement impossible pour un fraudeur de fabriquer Y de toutes pièces, c'est à dire sans que le deuxième élément de preuve y ne soit exclusivement généré par la première entité A. En effet, étant donné n, e, x et c, il est infaisable de trouver une valeur de Y qui satisfasse l'équation de vérification de la quatrième étape, si la factorisation est un problème difficile.

La clé publique est le couple (n, e) et l'authentification ou l'identification de l'entité A par l'entité B se déroule en itérant k fois le protocole à présent décrit où C .désigne une entité quelconque autre que B. En comparaison d'autres protocoles de l'état de la technique où par exemple dans le cas du logarithme discret, la clé publique est un quadruplet (n, e, g, v), la réduction de la quantité de composants de la clé publique, réduit la quantité d'opérations à effectuer sans -nuire à la sécurité. Avantageusement, conformément à l'invention, la clé publique ici utilisée étant de type RSA, le protocole décrit s'intègre facilement dans un contexte RSA largement exploité.

Le procédé se déroule de façon identique à celle décrite en référence à la figure 1 jusqu'à l'étape 13. En référence à la figure 5, l'étape 13 est modifiée en ce que l'entité A envoie l'image y de clé privée d à l'entité intermédiaire C. Comme vu précédemment, l'image y ne donne aucune information sur la clé privée.

Une réception par l'entité C de l'image y, valide une transition 14 qui active alors la cinquième étape 15.

Dans l'étape 15, c'est ici l'entité intermédiaire C qui calcule le troisième élément de preuve $Y = g^y$ (mod n) et envoie Y à B.

Le procédé se poursuit alors de façon identique à celle décrite en référence à la figure 1 par la transition 16 et l'étape 17. Toutefois, l'étape 17 est modifiée en ce que la deuxième entité B n'a plus qu'à élever le troisième élément de preuve Y à une puissance d'exposant e et à en multiplier le résultat par $g^c$ (mod n).

Physiquement, l'entité intermédiaire C est par exemple mise en oeuvre dans une puce, non nécessairement sécurisée, contenue dans le dispositif de sécurité du prouveur tel qu'une carte à puce, dans le dispositif de sécurité du vérificateur tel qu'un terminal de paiement, ou encore dans un autre dispositif tel qu'un ordinateur. La sécurité réside dans le fait que l'entité C ne peut trouver par elle-même une valeur Y qui convienne, c'est-à-dire telle que l'équation de vérification soit satisfaite.

Les protocoles précédemment décrits peuvent être transformés en protocoles d'authentification de messages ou en schémas de signature numérique.

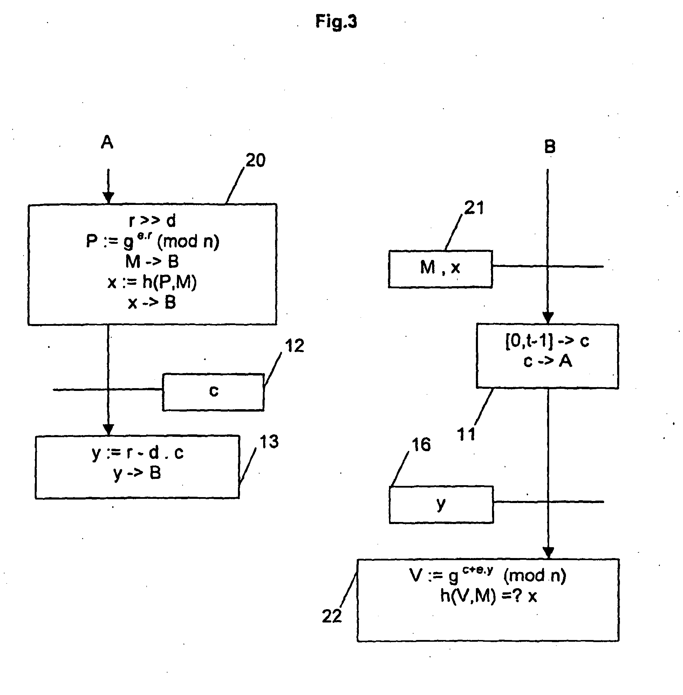

La figure 3 montre des étapes de procédé qui permettent d'authentifier qu'un message M reçu par la deuxième entité B, a été émis par la première entité A.

Dans une première étape 20, l'entité A génère un premier nombre entier aléatoire r très supérieur à du et calcule un potentiel de preuve P en utilisant une formule telle que $P = g^{e \cdot r}$ (mod n) comme dans l'étape 9 pour le premier élément de preuve. Au lieu d'envoyer P à l'entité B, l'entité A génère un premier élément de preuve x en appliquant au message M conjointement avec le nombre P une fonction h, par exemple égale à une fonction de hachage cryptographique ou incluant une fonction de hachage cryptographique de sorte que:

$$x = h(P, M).$$

L'entité A envoie alors le message M et le premier élément de preuve x à l'entité B.

Une réception par l'entité B du message M et du premier élément de preuve x, valide une transition 21 qui active une deuxième étape 11. Le procédé se poursuit ensuite-de façon identique à cette décrite en référence à l'une des figures 1 ou 5.

Dans l'étape 11, l'entité B envoie à l'entité A, un nombre entier c choisi au hasard dans un intervalle [0,t - 1] dit de sécurité. Ainsi, le nombre c est commun aux entités A et B et aussi à toute autre entité s'infiltrant dans le dialogue entre les entités A et B.

Une réception par l'entité A du nombre commun c, valide une transition 12 qui active alors une troisième étape 13.

Dans l'étape 13, l'entité A calcule y = r - d·c. Ainsi, l'entité A génère une image y de la clé privée sous forme de combinaison linéaire du nombre r et du nombre d dont le coefficient multiplicatif est le nombre commun c. Le nombre aléatoire r étant très grand et non communiqué, une connaissance de l'image y ne permet pas de retrouver le produit d·c et par conséquent, ne permet pas de retrouver le nombre d de clé privée qui reste donc gardé secret par l'entité A. Seule l'entité A ayant connaissance du nombre d, seule l'entité A peut générer une image qui intègre le nombre commun c. Sur l'exemple de la figure 3, l'entité A envoie l'image y de clé privée à l'entité B mais peut aussi l'envoyer à une entité intermédiaire C comme sur la figure 5. Comme vu précédemment, l'image y ne donne aucune information sur la clé privée.

Une réception par l'entité B de l'image y, valide une transition 16 qui active alors la quatrième étape 22.

Dans l'étape 22, l'entité B calcule comme dans l'étape 17 une valeur de vérification V au moyen de la formule:

$$V = g^{c+ey} \pmod n$$

puis vérifie la concordance du deuxième-élément de preuve avec le premier élément de preuve au moyen de l'équation de vérification:

$$h(V,M) = x.$$

Dans la variante utilisant une fonction f, équation de vérification devient $h(f(g^{c+ey} \pmod n)), M) = x$.

Dans la variante utilisant une fonction f et faisant intervenir l'entité intermédiaire C, l'équation de vérification devient $h(f(Y^e g^c \pmod n)), M) = x$.

A la différence de l'authentification de message, la signature de message est indépendante de l'émetteur en ce sens que la signature d'un message M par l'entité A reste valable si l'entité B reçoit le message M de toute autre entité. Une taille supérieure ou égale à quatre-vingt bits pour l'exposant e de clé publique, est préconisée pour assurer un niveau acceptable de sécurité.

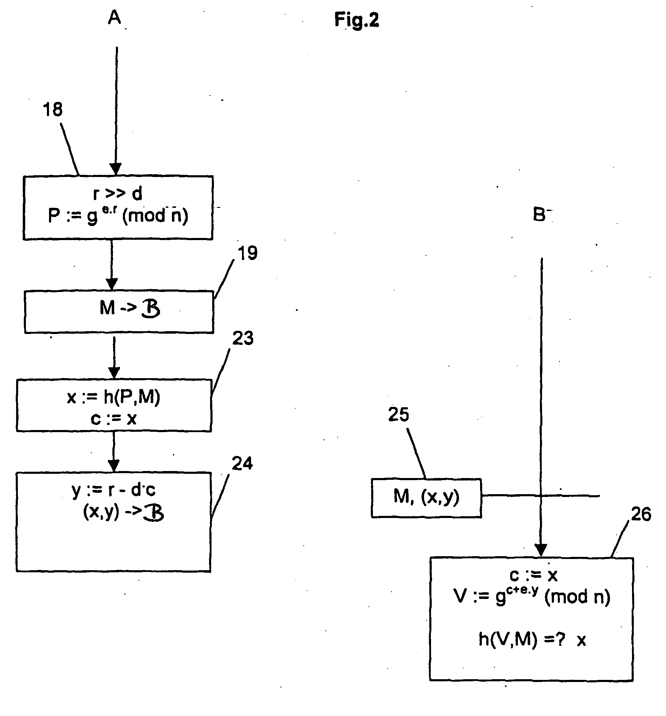

En référence à la figure 2, dans une première étape 18, l'entité A génère un premier nombre entier aléatoire r et calcule un potentiel de preuve $P = g^{er} \pmod n$.

Dans une deuxième étape 23 directement à la suite de l'étape 1, l'entité A génère un premier élément de preuve x, en appliquant au message M conjointement avec le nombre P, une fonction h, par exemple égale à une fonction de hachage cryptographique ou incluant une fonction de hachage cryptographique tel que:

$$x = h(P, M).$$

Dans l'étape 23, l'entité A génère le nombre commun c pris égal au premier élément de preuve x.

Dans une troisième étape 24 directement à la suite de l'étape 23, l'entité A calcule y = r - d·c. Ainsi, l'entité A génère une image y de la clé privée sous forme de combinaison linéaire du nombre r et du nombre d dont le coefficient multiplicatif est le nombre commun c. Le nombre aléatoire r étant très grand et non communiqué, une connaissance de l'image y ne permet pas de retrouver le produit d·c et par conséquent, ne permet pas de retrouver le nombre d de clé privée qui reste donc gardé secret par l'entité A. Seule l'entité A ayant connaissance du nombre d, seule l'entité A peut générer une image qui intègre le nombre commun c. Comme vu précédemment, l'image y ne donne aucune information sur la clé privée. Le couple (x,y) constitue une signature du message M car ce couple intègre à la fois le message M et un élément de clé privée qui garantit que l'entité A est à l'origine de cette signature.

L'entité A envoie ensuite le message M et la signature (x,y) à l'entité B ou à toute autre entité qui pourra envoyer ultérieurement le message signé à l'entité B.

On notera que le message M n'est pas nécessairement envoyé en étape 24. Le message M peut être envoyé dans une étape 19 indépendamment de sa signature car une modification du message M aurait une chance négligeable d'être compatible avec sa signature.

Une réception par l'entité B du message M avec sa signature (x,y), en provenance de l'entité A ou de toute autre entité valide une transition 25 qui active alors une étape 26.

Dans l'étape 26, l'entité B prend le nombre commun c comme étant égal au premier élément de preuve x.

Dans l'étape 26, l'entité B calcule comme dans l'étape 17 une valeur de vérification V au moyen de la formule:

$$V = g^{c+ey} \pmod n$$

puis vérifie la concordance du deuxième élément de preuve avec le premier élément de preuve au moyen de l'équation de vérification:

$$h(V,M) = x.$$

Ici, la concordance avec le premier élément de preuve, est vérifiée par cette égalité du fait que le nombre commun c généré en étape 23, concorde lui-même avec le premier-élément de preuve.

Dans la variante utilisant une fonction f, l'équation de vérification devient $h(f(g^{c+ey} \pmod n), M) = x$.

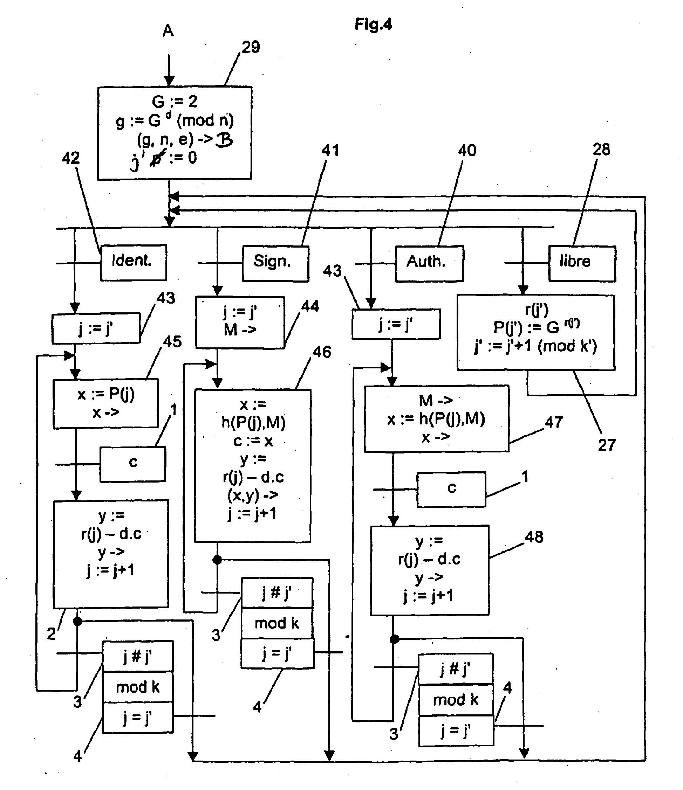

Une mise en oeuvre particulièrement performante du procédé de l'invention, est maintenant expliqué en référence à la figure 4.

Une étape 27 génère et stocke dans une mémoire de l'entité A, une ou plusieurs valeurs de nombre aléatoire r(j') à chacune desquelles est associé un potentiel de preuve P(j'). L'index j' sert à établir dans un tableau, une correspondance entre chaque nombre aléatoire r(j') et le potentiel de preuve P(j') associé. Chaque valeur de nombre aléatoire r(j') est générée de façon à être, soit nettement supérieure à la valeur de clé privée d, soit inférieure ou égale à $\lambda(n)$ comme expliqué précédemment. Chaque potentiel de preuve P(j') est calculé comme une puissance du nombre simple G avec r(j') pour exposant. L'étape 27 est exécutée pour chaque ligne d'index j' en incrémentant modulo une longueur k', l'index j' après chaque calcul de P(j'). La longueur k' représente la quantité de lignes du tableau de sorte que j'=0 indexant la première ligne du tableau, les exécutions de l'étape 27 s'arrêtent lorsque j' revient à zéro ou continuent pour renouveler les valeurs contenues dans le tableau. La longueur k' est de valeur égale ou supérieure à k.

Le calcul de P(j') est effectué par l'entité A ou par une entité de confiance qui reçoit de l'entité A, le nombre aléatoire r(j') ou la valeur $\lambda(n)$ pour choisir des nombres aléatoires r(j') inférieurs ou égaux à $\lambda(n)$. Lorsque le calcul de P(j') est effectué par l'entité A, chaque exécution de l'étape 27 est activée par une transition 28 qui est validée lorsque des moyens de traitement numérique de l'entité A sont détectés libres.

Le nombre simple G est déterminé dans une étape initiale 29. Lorsque le nombre générique g est imposé et donc connu de tous, l'entité A a simplement besoin de communiquer la clé publique (n,e), le nombre simple G est calculé de façon à ce que $G = g^e$ modulo n. Lorsque le nombre générique g n'est pas imposé, l'entité A choisit une valeur de G, par exemple G=2 et génère $g = G^d$ modulo n. Le nombre générique g est alors transmis avec la clé publique. L'index j' est initialisé à zéro de façon à débuter une première exécution de l'étape 27 pour une première ligne de tableau. Chaque fin d'exécution de l'étape 27 se rebranche en sortie de l'étape 29 pour scruter la transition 28 et prioritairement des transitions 40, 41, 42.

La transition 42 est validée par une transaction d'identification qui active alors une suite d'étapes 43 et 45.

L'étape 43 positionne un indice d'itération j, par exemple égal à l'index courant j' du tableau qui contient les nombres aléatoires et les potentiels de preuve associés.

Dans l'étape 45, l'entité A génère le premier élément x par simple lecture du potentiel de preuve P(j) dans le tableau. Pendant la transaction détectée par validation de la transition 42, la génération du premier élément de preuve ne nécessite donc aucun calcul de puissance. Le premier élément de preuve x est ainsi émis rapidement.

Une transition 1 est validée par une réception du nombre commun c qui active alors une étape 2.

Dans l'étape 2, l'entité A génère le deuxième élément de preuve y comme expliqué précédemment. Les opérations se limitant à quelques multiplications et additions ou soustractions, demandent peu de temps de calcul. Le deuxième élément de preuve y est ainsi émis rapidement après réception du nombre commun c.

Dans l'étape 2, l'indice j est augmenté d'un incrément unitaire de façon à réitérer l'étape 45 et l'étape 2 tant que j est détecté dans une transition 3, différent de j' modulo k, jusqu'à ce qu'une transition 4 détecte que j est égal à j' modulo k pour retourner en sortie de l'étape 29 après k exécutions de l'étape 45.

La transition 41 est validée par une transaction de signature de message M. La transition 41 active alors une suite d'étapes 44 et 46.

L'étape 44 positionne un indice d'itération j, par exemple égal à l'index courant j' du tableau-qui contient les nombres aléatoires et les potentiels de preuve associés. Le message M est émis en étape 44.

Dans l'étape 46, l'entité A génère le premier élément de preuve x en appliquant la fonction de hachage standard h() au message M et au résultat d'une simple lecture du potentiel de preuve P(j) dans le tableau. Le nombre commun c est pris égal au premier élément de preuve x.

Dans l'étape 46, l'entité A génère le deuxième élément de preuve y comme expliqué précédemment. Les opérations se limitant à quelques multiplications et additions ou soustractions, demandent peu de temps de calcul. Pendant la transaction détectée par validation de la transition 41; la génération de signature constituée du premier élément de preuve x et du deuxième élément de preuve y, ne nécessite donc aucun calcul de puissance. La signature (x,y) est ainsi émise rapidement.

Facultativement dans l'étape 46, l'indice j est augmenté d'un incrément unitaire de façon à réitérer l'étape 46 tant que j est détecté dans une transition 3, différent de j' modulo k, jusqu'à ce qu'une transition 4 détecte que j est égal à j' modulo k pour retourner en sortie de l'étape 29 après k exécutions de l'étape 46.

La transition 40 est validée par une transaction d'authentification de message M. La transition 40 active alors une suite d'étapes 43 et 47.

L'étape 43 positionne un indice d'itération j, par exemple égal à l'index courant j' du tableau qui contient les nombres aléatoires et les potentiels de preuve associés.

Dans l'étape 47, l'entité A émet le message M et le premier élément de preuve x. Le premier élément de preuve x est généré en appliquant la fonction de hachage standard h() au message M et au résultat d'une simple lecture du potentiel de preuve P(j) dans le tableau.

Pendant la transaction détectée par validation de la transition 40, la génération du premier élément de preuve ne nécessite donc aucun calcul de puissance. Le premier élément de preuve x est ainsi émis rapidement.

Une transition 1 est validée par une réception du nombre commun c qui active alors une étape 48.

Dans l'étape 48, l'entité A génère le deuxième élément de preuve y comme expliqué précédemment. Les opérations se limitant à quelques multiplications et additions ou soustractions, demandent peu de temps de calcul. Le deuxième élément de preuve y est ainsi émis rapidement après réception du nombre commun c.

Dans l'étape 48, l'indice j est augmenté d'un incrément unitaire de façon à réitérer l'étape 47 et l'étape 48 tant que j est détecté dans une transition 3, différent de j' modulo k, jusqu'à ce qu'une transition 4 détecte que p est égal à j' modulo k pour retourner en sortie de l'étape 29 après k exécutions de l'étape 47.

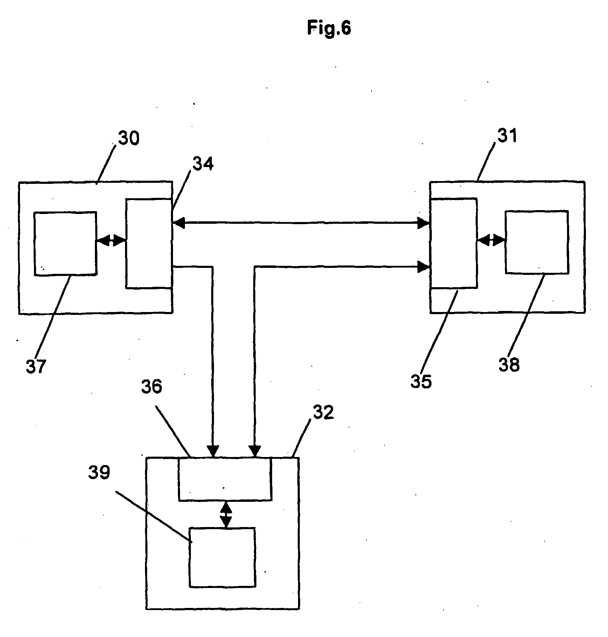

En référence à la figure 6, les entités A, B et C décrites précédemment sont matérialisées respectivement dans un dispositif prouveur 30, un dispositif vérificateur 31 et un dispositif intermédiaire 32. Le dispositif prouveur 30 est par exemple une carte à microprocesseur telle qu'une carte de crédit, une carte d'identification d'abonné d'un téléphone mobile. Le dispositif vérificateur 31 est par exemple un terminal bancaire ou un serveur de commerce électronique, un équipement d'opérateur de télécommunication mobile. Le dispositif intermédiaire 32 est par exemple une extension de carte à microprocesseur, un terminal de lecture de carte de crédit ou une carte électronique de téléphone mobile.

Le dispositif prouveur 30 comprend des moyens de communication 34 et des moyens de calcul 37. Le dispositif prouveur 30 est protégé contre les intrusions. Les moyens de communication 34 sont agencés pour émettre le premier élément de preuve x conformément à l'étape 9, 45 ou 47, décrite en référence à la figure 1, 3 ou 4, le deuxième élément de preuve y conformément à l'étape 13 décrite en référence aux figures 1 et 3, à l'étape 24 décrite en référence à la figure 2 ou aux étapes 2 et 48 décrites en référence à la figure 4, le message M conformément aux étapes 19, 20, 44 ou 47 décrites en référence aux figures 1 à 4 ou le nombre commun c conformément à l'étape 23, 46 décrite en référence aux figures 2 et 4 selon la version du procédé à mettre en oeuvre. Les moyens de communication 34 sont aussi agencés pour recevoir le nombre commun c conformément à la transition 12 ou 1 décrite en référence aux figures 1 à 4 lorsque des versions du procédé à mettre en oeuvre correspondent à l'identification ou l'authentification. Pour une version de procédé à mettre en oeuvre correspondant à une signature, les moyens de communication 34 n'ont pas besoin d'être agencés pour recevoir le nombre commun c.

Les moyens de calcul 37 sont agencés pour exécuter les étapes 9 et 13 décrites en référence à la figure 1 ou 5, les étapes 18, 23 et 24 décrites en référence à la figure 2, les étapes 13 et 20 décrites en référence à la figure 3 ou les étapes décrites en référence à la figure 4 selon la version de procédé à mettre en oeuvre. De façon connue, les moyens de calcul 37 comprennent un microprocesseur et des microprogrammes ou des circuits combinatoires dédiés aux calculs précédemment décrits.

Le dispositif vérificateur 31 comprend des moyens de communication 35 et des moyens de calcul 38. Les moyens de communication 35 sont agencés pour émettre un ou plusieurs nombres communs c conformément à l'étape 11 décrite en référence aux figures 1, 3 et 5 lorsque des versions du procédé à mettre en oeuvre correspondent à l'authentification. Pour une version de procédé à mettre en oeuvre correspondant à une signature, les moyens de communication 35 n'ont pas besoin d'être agencés pour émettre de nombre commun c. Les moyens de communication 35 sont aussi agencés pour recevoir les deux éléments de preuve x et y conformément aux transitions 10 et 16 décrites en référence aux figures 1 et 5, un message M avec le premier élément de preuve x et le deuxième élément de preuve y conformément aux transitions 21 et 16 décrites en référence à la figure 3 ou le deuxième élément de preuve et le message M avec un ou plusieurs nombres communs c et l'image y de clé privée conformément aux transitions 2 et 8 décrites en référence à la figure 5.

Les moyens de calcul 38 sont agencés pour exécuter les étapes 11 et 17 décrites en référence aux figures 1 et 5, l'étape 26 décrite en référence à la figure 2 ou les étapes 11 et 22 décrites en référence à la figure 3, selon la version de procédé à mettre en oeuvre. De façon connue, les moyens de calcul 38 comprennent un microprocesseur et des microprogrammes ou des circuits combinatoires dédiés aux calculs précédemment décrits.

Le dispositif intermédiaire 32 comprend des moyens de communication 36 et des moyens de calcul 39. Les moyens de communication 36 sont agencés pour émettre le troisième élément de preuve Y conformément à l'étape 15 décrite en référence à la figure 5. Les moyens de communication 36 sont aussi agencés pour recevoir le deuxième élément de preuve y conformément à la transition 14 décrite en référence à la figure 5.

Les moyens de calcul 39 sont agencés pour exécuter l'étape 15 décrite en référence à la figure 5: De façon connue, les moyens de calcul 39 comprennent un microprocesseur et des programmes ou des circuits combinatoires dédiés aux calculs précédemment décrits.

De façon améliorée, les moyens de calcul et de communication précédemment décrits sont agencés pour répéter k fois l'exécution des étapes précédemment décrites, chaque fois pour un premier élément de preuve et un deuxième élément de preuve distincts.

**Revendications**

1. Procédé cryptographique de sécurisation d'une transaction entre au moins une première entité prouveur (A) et une deuxième entité vérificateur (B) disposant d'un nombre générique commun $g$, dans lequel la première entité (A) génère au moyen d'une clé privée $d$ de type RSA un premier élément de preuve vérifiable par la deuxième entité vérificateur (B) au moyen d'une clé publique comprenant un exposant de clé publique $e$ et un module $n$ de type RSA associée à ladite clé privée $d$, **caractérisé en ce que** ce procédé inclut au moins:

   - la transmission par la première entité prouveur (A) à la deuxième entité vérificateur (B) du premier élément de preuve $x$, incluant au moins le résultat d'une première puissance, modulo le module $n$, du nombre générique commun $g$ élevé à la puissance d'un premier exposant produit d'un nombre aléatoire $r$ et de l'exposant de clé publique $e$, le calcul de ladite première puissance étant exécutable indépendamment de la transaction :
   - le choix d'un nombre c commun à la première entité prouveur (A) et à la deuxième entité vérificateur (B) ;
   - la génération par la première entité prouveur (A) d'un deuxième élément de preuve $y$, fonction du nombre aléatoire $r$, de la valeur de la clé privée $d$ et du nombre commun $c$, et la transmission dudit deuxième élément de preuve $y$ ou d'une fonction prédéterminée de celui-ci au deuxième élément vérificateur (B) ;
   - la vérification pour sécurisation de la transaction par la deuxième entité vérificateur (B) de l'identité de valeur dudit premier élément de preuve $x$ et d'une valeur de vérification incluant au moins le résultat d'une deuxième puissance, modulo le module $n$, du nombre générique commun $g$ élevé à la puissance d'un deuxième exposant, combinaison linéaire de tout ou partie du nombre commun $c$ et du produit de l'exposant de clé publique $e$ et du deuxième élément de preuve $y$.

2. Procédé cryptographique selon la revendication 1, **caractérisé en ce que** pour permettre une authentification de la première entité prouveur (A) auprès de la deuxième entité vérificateur (B) :

   - le premier élément de preuve x est le résultat de la première puissance, modulo le module $n$, dudit nombre commun $g$ ;
   - le nombre entier aléatoire $r$ est gardé secret par la première entité prouveur (A) ;
   - le nombre commun c est choisi au hasard par la deuxième entité vérificateur (B) dans un intervalle de sécurité [0, t-1], puis transmis à la première entité prouveur (A) par la deuxième entité vérificateur (B) après réception du premier élément de preuve $x$ ;
   - la vérification est une vérification de l'égalité du premier élément de preuve $x$ et du résultat de la deuxième puissance, modulo le module $n$, du nombre générique commun $g$.

3. Procédé cryptographique selon la revendication 1, **caractérisé en ce que**, pour permettre à ladite première entité prouveur (A) de signer un message (M), ledit procédé inclut :

   - la génération par la première entité prouveur (A) du premier élément de preuve $x$ par application d'une fonction de hachage standard au message (M) et au résultat de ladite première puissance, modulo le module $n$, du nombre générique commun $g$, et la transmission dudit message (M) à la deuxième entité vérificateur (B) ;
   - le choix par la première entité prouveur (A) et la deuxième entité vérificateur (B) dudit nombre commun (c) comme étant égal au premier élément de preuve $x$ ;
   - la vérification de l'égalité du premier élément de preuve x et du résultat de ladite fonction de hachage standard appliquée au message (M) et audit résultat de la deuxième puissance, modulo le module $n$, dudit nombre générique commun $g$.

4. Procédé cryptographique selon la revendication 1, **caractérisé en ce que** pour permettre à la deuxième entité vérificateur (B) d'authentifier un message (M) provenant de la première entité prouveur (A), ledit procédé inclut :

   - la génération par la première entité prouveur (A) du premier élément de preuve $x$ par application d'une fonction de hachage standard au message (M) et au résultat de ladite première puissance, modulo le module n, dudit nombre générique commun g, et la transmission dudit message (M) à ladite deuxième entité vérificateur (B) ;
- le choix par la deuxième entité vérificateur (B) du nombre commun c dans un Intervalle de sécurité [0, t-1], et la transmission de ce nombre commun c à la première entité prouveur (A), après réception du premier élément de preuve x ;
- la vérification de l'identité du premier élément de preuve x et du résultat de la fonction de hachage standard appliquée au message (M) et à la deuxième puissance, modulo le module n, du nombre générique commun g.

**5.** Procédé cryptographique selon l'une des revendications 2 à 4,
**caractérisé en ce que** :

- le deuxième élément de preuve y est généré par la première entité (A) en retranchant du nombre entier aléatoire r, la clé privée d multipliée par le nombre commun c,
- la combinaison linéaire exposant de la deuxième puissance, modulo le module n du nombre générique commun g comprend un coefficient unitaire positif pour le nombre commun c et un coefficient unitaire positif pour le produit de l'exposant e de clé publique par le deuxième élément de preuve y,
- dans la relation vérifiée, le premier élément de preuve x est pris en compte avec une puissance d'exposant unitaire.

**6.** Procédé cryptographique selon l'une des revendications 2 ou 4,
**caractérisé en ce que** :

- le nombre commun c étant scindé en un premier nombre commun élémentaire a et un deuxième nombre commun élémentaire b, le deuxième élément de preuve y est généré par la première entité (A) en retranchant du nombre entier aléatoire r multiplié par le premier nombre commun élémentaire a, la clé privée d multipliée par le deuxième nombre commun élémentaire b,
- la combinaison linéaire exposant de la deuxième puissance, modulo le module n du nombre générique commun g, comprend un coefficient nul pour le premier nombre commun élémentaire a, un coefficient unitaire positif pour le deuxième nombre commun élémentaire b et un coefficient unitaire positif pour le produit du premier exposant e de clé publique par le deuxième élément de preuve y,
- dans la relation vérifiée, le premier élément de preuve x est pris en compte avec une puissance d'exposant égal au premier nombre commun élémentaire a.

**7.** Procédé cryptographique selon l'une des revendications 5 ou 6, **caractérisé en ce que** le deuxième élément de preuve y est calculé modulo une image du module n calculée par une fonction de Carmichaël λ ou modulo un multiple de l'ordre du nombre générique g, modulo le module n.

**8.** Procédé cryptographique selon l'une des revendications 5 ou 6, **caractérisé en ce que** le nombre aléatoire r est très supérieur, au sens du problème mathématique du logarithme discret, à la valeur de clé privée d.

**9.** Procédé cryptographique selon la revendication 7, **caractérisé en ce que** le nombre entier aléatoire r est inférieur à une image du module n calculée par une fonction de Carmichaël λ ou à un multiple de l'ordre du nombre générique g modulo le module n.

**10.** Procédé cryptographique selon l'une des revendications 5 à 9, **caractérisé en ce que** le premier exposant est calculé modulo une Image du module n par une fonction de Carmichaël λ ou modulo un multiple de l'ordre du nombre générique g modulo le module n.

**11.** Procédé cryptographique selon l'une des revendications précédentes, **caractérisé en ce que** le nombre générique commun g est transmis avec la clé publique, le nombre générique commun g étant égal à un nombre simple G élevé à une puissance modulo le module n avec pour exposant la clé privée d.

**12.** Procédé cryptographique selon l'une des revendications précédentes, **caractérisé en ce que**, pour une transaction impliquant en outre une troisième entité intermédiaire (C), disposant dudit nombre générique commun g, ledit procédé inclut au moins, suite à la réception par ladite entité intermédiaire (C) dudit deuxième élément de preuve y :

- la génération, par ladite entité Intermédiaire (C) d'un troisième élément de preuve Y, résultat d'une troisième puissance, modulo le module n, du nombre générique commun g élevé à la puissance d'un troisième exposant formé par ledit deuxième élément de preuve y, et la transmission dudit troisième élément de preuve Y à ladite deuxième entité vérificateur (B) ;
- la vérification par ladite deuxième entité vérificateur (B) de l'égalité entre une valeur de vérification produit d'une puissance du troisième élément de preuve Y élevé à la puissance de l'exposant e de clé publique et d'une puissance dudit nombre générique commun g élevé à la puissance du nombre commun c, modulo le module n, et ledit premier élément de preuve x.

**13.** Dispositif prouveur (30) muni d'une clé privée d de type RSA gardée secrète et protégé contre toute Intrusion, apte à générer lors d'une transaction avec un dispositif vérificateur, une preuve, telle que la vérification de cette preuve peut être effectuée à l'aide d'une clé publique associée à ladite clé privée, ladite clé publique de type RSA comprenant un exposant de clé publique e et un module n, **caractérisé en ce qu'**il comprend :

- des moyens de calcul (37) agencés pour générer un premier élément de preuve x en tout ou partie indépendamment de la transaction ledit premier élément de preuve x incluant au moins le résultat d'une première puissance, modulo le module n, du nombre générique commun g élevé à la puissance d'un premier exposant produit d'un nombre aléatoire r et de l'exposant de clé publique e, et pour générer un deuxième élément de preuve y lié au premier élément de preuve et qui dépend d'un nombre commun c spécifique à la transaction et de ladite clé secrète;
- des moyens de communication (34) agencés pour émettre au moins le premier et le deuxième élément de preuve et agencés pour émettre vers ou recevoir du dispositif vérificateur ledit nombre commun c.

**14.** Dispositif prouveur (30) selon la revendication 13, **caractérisé en ce que**:

- les moyens de calcul (37) sont d'une part agencés pour générer un premier nombre aléatoire r, et pour élever un nombre générique commun g à une première puissance modulo le module n ayant un premier exposant égal à un produit de l'exposant de clé publique e par le nombre entier aléatoire r ;
- les moyens de calcul (37) sont d'autre part agencés pour générer le deuxième élément de preuve y par différence entre le nombre entier aléatoire r et la clé privée d multipliée par le nombre commun c, ou, le nombre commun c étant scindé en deux nombres communs élémentaires a et b, en retranchant du nombre entier aléatoire r multiplié par le premier nombre commun élémentaire a, la clé privée d multipliée par le deuxième nombre commun élémentaire b.

**15.** Dispositif prouveur (30) selon la revendication 14, **caractérisé en ce que** les moyens de calcul (37) sont agencés pour effectuer des opérations modulo une image du module n calculée par une fonction de Carmichaël λ ou modulo un multiple de l'ordre du nombre générique g modulo le module n.

**16.** Dispositif vérificateur (31), pour vérifier qu'une preuve est issue d'un dispositif prouveur muni d'une clé privée d de type RSA gardée secrète par le dispositif prouveur, à l'aide d'une clé publique associée à ladite clé privée, ladite clé publique de type RSA comprenant un exposant de clé publique e et un module n, **caractérisé en ce qu'**il comprend :

- des moyens de communication (35) agencés pour recevoir un premier élément de preuve x incluant au moins le résultat d'une première puissance, modulo le module n, d'un nombre générique commun g élevé à la puissance d'un premier exposant produit d'un nombre aléatoire r et de l'exposant de clé publique e et un deuxième élément de preuve y ou un troisième élément de preuve Y, et pour recevoir ou émettre un nombre commun c spécifique à une transaction au sein de laquelle sont reçus le premier et le deuxième ou le troisième élément de preuve ;
- des moyens de calcul (38) agencés pour la vérification, pour sécurisation de la transaction, par ce dispositif vérificateur de l'identité de valeur dudit premier élément de preuve x et d'une valeur de vérification incluant au moins le résultat d'une deuxième puissance, modulo le module n, du nombre générique commun g élevé à la puissance d'une deuxième exposant, combinaison linéaire de tout ou partie du nombre commun c et du produit de l'exposant de clé publique e et du deuxième élément de preuve y.

**17.** Dispositif vérificateur (31) selon la revendication 16, **caractérisé en ce que** les moyens de communication sont agencés pour recevoir le deuxième élément de preuve y et **en ce que** les moyens de calcul (38) sont agencés pour calculer le premier exposant et ladite première puissance du nombre générique commun g.

**18.** Dispositif vérificateur (31) selon la revendication 16, **caractérisé en ce que** les moyens de communication sont agencés pour recevoir le troisième élément de preuve Y et **en ce que** les moyens de calculs (38) sont agencés pour élever le troisième élément de preuve $Y$ à une puissance de l'exposant de clé publique $e$ pour en multiplier le résultat par le nombre générique commun $g$ élevé à une puissance ayant pour exposant le nombre commun $c$.

**Claims**

1. Cryptographic method for securing a transaction between at least one first prover entity (A) and a second verifier entity (B) furnished with a common generic number $g$, in which the first entity (A) generates by means of a private key $d$ of RSA type a first element of proof verifiable by the second verifier entity (B) by means of a public key comprising a public key exponent $e$ and a modulus $n$ of RSA type associated with said private key $d$, **characterized in that** this method includes at least:

   - the transmission by the first prover entity (A) to the second verifier entity (B) of the first element of proof $x$, including at least the result of a first power, modulo the modulus $n$, of the common generic number g raised to the power of a first exponent which is the product of a random number $r$ and of the public key exponent $e$, the calculation of said first power being executable independently of the transaction;
   - the choosing of a number $c$ common to the first prover entity (A) and to the second verifier entity (B);
   - the generation by the first prover entity (A) of a second element of proof y, dependent on the random number $r$, on the value of the private key $d$ and the common number $c$, and the transmission of said second element of proof $y$ or of a predetermined function thereof to the second verifier element (B);
   - the verification for securing of the transaction by the second verifier entity (B) of the value identity of said first element of proof $x$ and of a verification value including at least the result of a second power, modulo the modulus $n$, of the common generic number $g$ raised to the power of a second exponent, linear combination of all or part of the common number $c$ and of the product of the public key exponent $e$ and of the second element of proof $y$.

2. Cryptographic method according to Claim 1, **characterized in that** to allow authentication of the first prover entity (A) at the second verifier entity (B):

   - the first element of proof x is the result of the first power, modulo the modulus n, of said common number $g$;
   - the random integer $r$ is kept secret by the first prover entity (A);
   - the common number $c$ is chosen at random by the second verifier entity (B) from a security interval [0, t-1], then transmitted to the first prover entity (A) by the second verifier entity (B) after receipt of the first element of proof $x$;
   - the verification is a verification of the equality of the first element of proof $x$ and of the result of the second power, modulo the modulus n, of the common generic number $g$.

3. Cryptographic method according to Claim 1, **characterized in that**, to allow said first prover entity (A) to sign a message (M), said method includes:

   - the generation by the first prover entity (A) of the first element of proof $x$ by applying a standard hash function to the message (M) and to the result of said first power, modulo the modulus n, of the common generic number $g$, and the transmission of said message (M) to the second verifier entity (B);
   - the choosing by the first prover entity (A) and the second verifier entity (B) of said common number (c) as being equal to the first element of proof $x$;
   - the verification of the equality of the first element of proof $x$ and of the result of said standard hash function applied to the message (M) and to said result of the second power, modulo the modulus n, of said common generic number $g$.

4. Cryptographic method according to Claim 1,
   **characterized in that** to allow the second verifier entity (B) to authenticate a message (M) originating from the first prover entity (A), said method includes:

   - the generation by the first prover entity (A) of the first element of proof $x$ by applying a standard hash function to the message (M) and to the result of said first power, modulo the modulus n, of said common generic number $g$, and the transmission of said message (M) to said second verifier entity (B);
   - the choosing by the second verifier entity (B) of the common number $c$ from a security interval [0, t-1], and the transmission of this common number $c$ to the first prover entity (A), after receipt of the first element of proof $x$;
   - the verification of the identity of the first element of proof $x$ and of the result of the standard hash function applied to the message (M) and to the second power, modulo the modulus n, of the common generic number $\underline{g}$.

5. Cryptographic method according to one of Claims 2 to 4, **characterized in that**:

- the second element of proof $\underline{y}$ is generated by the first entity (A) by subtracting, from the random integer $\underline{r}$, the private key $\underline{d}$ multiplied by the common number $\underline{c}$;
- the linear combination exponent of the second power, modulo the modulus $\underline{n}$ of the common generic number $\underline{g}$ comprises a positive unitary coefficient for the common number $\underline{c}$ and a positive unitary coefficient for the public key exponent $\underline{e}$ multiplied by the second element of proof $\underline{y}$; and
- in the verified relationship, the first element of proof $\underline{x}$ is taken into account with a unitary exponent power.

6. Cryptographic method according to either of Claims 2 and 4, **characterized in that**:

- since the common number $\underline{c}$ is split into a first elementary common number $\underline{a}$ and a second elementary common number $\underline{b}$, the second element of proof $\underline{y}$ is generated by the first entity (A) by subtracting, from the random integer $\underline{r}$ multiplied by the first elementary common number $\underline{a}$, the private key $\underline{d}$ multiplied by the second elementary common number $\underline{b}$;
- the linear combination exponent of the second power, modulo the modulus $\underline{n}$ of the common generic number $\underline{g}$, comprises a zero coefficient for the first elementary common number $\underline{a}$, a positive unitary coefficient for the second elementary common number $\underline{b}$ and a positive unitary coefficient for the public key first exponent $\underline{e}$ multiplied by the second element of proof $\underline{y}$; and
- in the verified relationship, the first element of proof x is taken into account with an exponent power equal to the first elementary common number $\underline{a}$.

7. Cryptographic method according to either of Claims 5 and 6, **characterized in that** the second element of proof $\underline{y}$ is calculated modulo an image of the modulus $\underline{n}$ calculated via a Carmichael function $\underline{\lambda}$ or modulo a multiple of the order of the generic number $\underline{g}$, modulo the modulus $\underline{n}$.

8. Cryptographic method according to either of Claims 5 and 6, **characterized in that** the random number $\underline{r}$ is very much greater, within the sense of the mathematical problem of the discrete logarithm, than the value of the private key $\underline{d}$.

9. Cryptographic method according to Claim 7, **characterized in that** the random integer $\underline{r}$ is less than an image of the modulus $\underline{n}$ calculated via a Carmichael function $\underline{\lambda}$ or less than a multiple of the order of the generic number $\underline{g}$ modulo the modulus $\underline{n}$.

10. Cryptographic method according to one of Claims 5 to 9, **characterized in that** the first exponent is calculated modulo an image of the modulus $\underline{n}$ via a Carmichael function $\underline{\lambda}$ or modulo a multiple of the order of the generic number $\underline{g}$ modulo the modulus $\underline{n}$.

11. Cryptographic method according to one of the preceding claims, **characterized in that** the common generic number $\underline{g}$ is transmitted with the public key, the common generic number $\underline{g}$ being equal to a simple number $\underline{G}$ raised to a power modulo the modulus n with the private key $\underline{d}$ as exponent.

12. Cryptographic method according to one of the preceding claims, **characterized in that**, for a transaction involving moreover a third intermediate entity (C), furnished with said common generic number g, said method includes at least, following the receipt by said intermediate entity (C) of said second element of proof $\underline{y}$:

- the generation, by said intermediate entity (C) of a third element of proof $\underline{Y}$, the result of a third power, modulo the modulus $\underline{n}$, of the common generic number $\underline{g}$ raised to the power of a third exponent formed by said second element of proof $\underline{y}$, and the transmission of said third element of proof $\underline{Y}$ to said second verifier entity (B);
- verification by said second verifier entity (B) of the equality between a verification value which is the product of a power of the third element of proof $\underline{Y}$ raised to the power of the public key exponent $\underline{e}$ and of a power of said common generic number $\underline{g}$ raised to the power of the common number $\underline{c}$, modulo the modulus $\underline{n}$, and said first element of proof $\underline{x}$.

13. Prover device (30) provided with an RSA private key $\underline{d}$ kept secret and protected against any intrusion, capable of generating, during a transaction with a verifier device, a proof such that the verification of this proof can be effected by means of a public key associated with said private key, said RSA public key comprising a public key exponent $\underline{e}$ and a modulus $\underline{n}$, **characterized in that** it comprises:

- calculation means (37) designed to generate a first element of proof $\underline{x}$ completely or partly independently of the transaction, said first element of proof $\underline{x}$ including at least the result of a first power, modulo the modulus $\underline{n}$, of the common generic number $\underline{g}$ raised to the power of a first exponent which is the product of a random number r and of the public key exponent $\underline{e}$, and to generate a second element of proof $\underline{y}$ related to the first element of proof and dependent on a common number c specific to the transaction and on said secret key; and
- communication means (34) designed to transmit at least the first and the second elements of proof and designed to transmit said common number c to the verifier device or to receive said common number therefrom.

14. Prover device (30) according to Claim 13,
**characterized in that**:

- the calculation means (37) are, on the one hand, designed to generate a first random number r and to raise a common generic number $\underline{g}$ to a first power modulo the modulus $\underline{n}$ having a first exponent equal to the public key exponent $\underline{e}$ multiplied by the random integer $\underline{r}$; and
- the calculation means (37) are, on the other hand, designed to generate the second element of proof $\underline{y}$ by taking the difference between the random integer $\underline{r}$ and the private key $\underline{d}$ multiplied by the common number $\underline{c}$ or the common number $\underline{c}$ being split into two elementary common numbers $\underline{a}$ and $\underline{b}$, by subtracting from the random integer $\underline{r}$ multiplied by the first elementary common number $\underline{a}$, the private key $\underline{d}$ multiplied by the second elementary common number $\underline{b}$.

15. Prover device (30) according to Claim 14, **characterized in that** the calculation means (37) are designed to carry out operations modulo an image of the modulus $\underline{n}$ calculated via a Carmichael function $\underline{\lambda}$ or modulo a multiple of the order of the generic number $\underline{g}$ modulo the modulus $\underline{n}$.

16. Verifier device (31) for verifying that a proof originates from a prover device provided with an RSA private key $\underline{d}$ kept secret by the prover device, by means of a public key associated with said private key, said RSA public key comprising a public key exponent $\underline{e}$ and a modulus $\underline{n}$, **characterized in that** it comprises:

- communication means (35) designed to receive a first element of proof x including at least the result of a first power, modulo the modulus n, of a common generic number $\underline{g}$ raised to the power of a first exponent which is the product of a random number $\underline{r}$ and of the public key exponent $\underline{e}$ and a second element of proof $\underline{y}$ or a third element of proof $\underline{Y}$, and to receive or transmit a common number $\underline{c}$ specific to a transaction within which the first and the second or the third element of proof are received; and
- calculation means (38) designed for the verification, for securing the transaction, by this verifier device of the value identity of said first element of proof $\underline{x}$ and of a verification value including at least the result of a second power, modulo the modulus n, of the common generic number g raised to the power of a second exponent, the linear combination of all or part of the common number $\underline{c}$ and of the product of the public key exponent $\underline{e}$ and of the second element of proof $\underline{y}$.

17. Verifier device (31) according to Claim 16, **characterized in that** the communication means are designed to receive the second element of proof $\underline{y}$ and **in that** the calculation means (38) are designed to calculate the first exponent and said first power of the common generic number $\underline{g}$.

18. Verifier device (31) according to Claim 16, **characterized in that** the communication means are designed to receive the third element of proof $\underline{Y}$ and **in that** the calculation means (38) are designed to raise the third element of proof $\underline{Y}$ to a power of the public key exponent $\underline{e}$ in order to multiply the result thereof by the common generic number $\underline{g}$ raised to a power having the common number $\underline{c}$ as exponent.

**Patentansprüche**

1. Kryptographisches Verfahren zur Sicherung einer Transaktion zwischen mindestens einer ersten Beweiser-Entität (A) und einer zweiten Prüfer-Entität (B), die über eine gemeinsame generische Zahl $\underline{g}$ verfügen, wobei die erste Entität (A) mittels eines privaten Schlüssels $\underline{d}$ vom Typ RSA ein erstes Beweiselement generiert, das von der zweiten Prüfer-Entität (B) mittels eines einen öffentlichen Schlüsselexponent $\underline{e}$ und einen Modul $\underline{n}$ vom Typ RSA aufweisenden öffentlichen Schlüssels geprüft werden kann, der dem privaten Schlüssel d zugeordnet ist, **dadurch gekennzeichnet, dass** dieses Verfahren mindestens umfasst:

- die Übertragung durch die erste Beweiser-Entität (A) an die zweite Prüfer-Entität (B) des ersten Beweiselements x, das mindestens das Ergebnis einer ersten Potenz, modulo der Modul n, der gemeinsamen generischen Zahl g erhoben auf die Potenz eines ersten Exponenten Produkt einer Zufallszahl r und des öffentlichen Schlüsselexponenten e umfasst, wobei die Berechnung der ersten Potenz unabhängig von der Transaktion ausgeführt werden kann;
- die Wahl einer gemeinsamen Zahl c der ersten Beweiser-Entität (A) und der zweiten Prüfer-Entität (B);
- die Generierung durch die erste Beweiser-Entität (A) eines zweiten Beweiselements y abhängig von der Zufallszahl r, dem Wert des privaten Schlüssels d und der gemeinsamen Zahl c, und die Übertragung des zweiten Beweiselements y oder einer vorbestimmten Funktion von diesem an das zweite Prüferelement (B);
- die Prüfung zur Sicherung der Transaktion durch die zweite Prüfer-Entität (B) der Wertidentität des ersten Beweiselements x und eines Prüfwerts, der mindestens das Ergebnis einer zweiten Potenz, modulo der Modul n, der gemeinsamen generischen Zahl g erhoben auf die Potenz eines zweiten Exponenten, lineare Kombination der ganzen oder eines Teils der gemeinsamen Zahl c und des Produkts des öffentlichen Schlüsselexponenten e und des zweiten Beweiselements y umfasst.

2. Kryptographisches Verfahren nach Anspruch 1, **dadurch gekennzeichnet, dass** zur Ermöglichung einer Authentifizierung der ersten Beweiser-Entität (A) bei der zweiten Prüfer-Entität (B):

- das erste Beweiselement x das Ergebnis der ersten Potenz, modulo der Modul n, der gemeinsamen Zahl g ist;
- die ganze Zufallszahl r von der ersten Beweiser-Entität (A) geheim gehalten wird;
- die gemeinsame Zahl c von der zweiten Prüfer-Entität (B) in einem Sicherheitsintervall [0, t-1] zufällig ausgewählt und dann an die erste Beweiser-Entität (A) von der zweiten Prüfer-Entität (B) nach Empfang des ersten Beweiselements x übertragen wird;
- die Prüfung eine Prüfung der Gleichheit des ersten Beweiselements x und des Ergebnisses der zweiten Potenz, modulo der Modul n, der gemeinsamen generischen Zahl g ist.

3. Kryptographisches Verfahren nach Anspruch 1, **dadurch gekennzeichnet, dass** das Verfahren, um der ersten Beweiser-Entität (A) das Signieren einer Mitteilung (M) zu erlauben, umfasst:

- die Generierung durch die erste Beweiser-Entität (A) des ersten Beweiselements x durch Anwendung einer Standard-Zerhackerfunktion an die Mitteilung (M) und an das Ergebnis der ersten Potenz, modulo der Modul n, der gemeinsamen generischen Zahl g, und die Übertragung der Mitteilung (M) an die zweite Prüfer-Entität (B);
- die Wahl durch die erste Beweiser-Entität (A) und die zweite Prüfer-Entität (B) der gemeinsamen Zahl (c) als gleich dem ersten Beweiselement x;
- die Prüfung der Gleichheit des ersten Beweiselements x und des Ergebnisses der an die Mitteilung (M) und an das Ergebnis der zweiten Potenz, modulo der Modul n, der gemeinsamen generischen Zahl g angewendeten Standard-Zerhackerfunktion.

4. Kryptographisches Verfahren nach Anspruch 1, **dadurch gekennzeichnet, dass** das Verfahren, um der zweiten Prüfer-Entität (B) die Authentifizierung einer von der ersten Beweiser-Entität (A) kommenden Mitteilung (M) zu erlauben, umfasst:

- die Generierung durch die erste Beweiser-Entität (A) des ersten Beweiselements x durch Anwendung einer Standard-Zerhackerfunktion an die Mitteilung (M) und an das Ergebnis der ersten Potenz, modulo der Modul n, der gemeinsamen generischen Zahl g, und die Übertragung der Mitteilung (M) an die zweite Prüfer-Entität (B);
- die Wahl durch die zweite Prüfer-Entität (B) der gemeinsamen Zahl c in einem Sicherheitsintervall [0, t-1], und die Übertragung dieser gemeinsamen Zahl c an die erste Beweiser-Entität (A) nach Empfang des ersten Beweiselements x;
- die Prüfung der Identität des ersten Beweiselements x und des Ergebnisses der an die Mitteilung (M) und an die zweite Potenz, modulo der Modul n, der gemeinsamen generischen Zahl g angewendeten Standard-Zerhackerfunktion.

5. Kryptographisches Verfahren nach einem der Ansprüche 2 bis 4, **dadurch gekennzeichnet, dass**:

- das zweite Beweiselement $y$ von der ersten Entität (A) generiert wird, indem von der ganzen Zufallszahl $r$ der private Schlüssel $d$ multipliziert mit der gemeinsamen Zahl $c$ abgezogen wird,
- die lineare Exponenten-Kombination der zweiten Potenz, modulo der Modul $n$, der gemeinsamen generischen Zahl $g$ einen positiven Einheitskoeffizient für die gemeinsame Zahl $c$ und einen positiven Einheitskoeffizient für das Produkt aus dem öffentlichen Schlüsselexponent $e$ und dem zweiten Beweiselement $y$ aufweist,
- in der geprüften Beziehung das erste Beweiselement $x$ mit einer Einheits-ExponentenPotenz berücksichtigt wird.

6. Kryptographisches Verfahren nach einem der Ansprüche 2 oder 4, **dadurch gekennzeichnet, dass**:

- wenn die gemeinsame Zahl $c$ in eine erste gemeinsame Elementarzahl $a$ und eine zweite gemeinsame Elementarzahl $b$ aufgeteilt ist, das zweite Beweiselement $y$ von der ersten Entität (A) durch Abziehen von der ganzen Zufallszahl $r$, multipliziert mit der ersten gemeinsamen Elementarzahl $a$, des privaten Schlüssels $d$, multipliziert mit der zweiten gemeinsamen Elementarzahl $b$, generiert wird,
- die lineare Exponentenkombination der zweiten Potenz, modulo der Modul $n$, der gemeinsamen generischen Zahl $g$ einen Koeffizient Null für die erste gemeinsame Elementarzahl $a$, einen positiven Einheitskoeffizient für die zweite gemeinsame Elementarzahl $b$ und einen positiven Einheitskoeffizient für das Produkt aus dem ersten öffentlichen Schlüsselexponent $e$ und dem zweiten Beweiselement $y$ aufweist,
- in der geprüften Beziehung das erste Beweiselement $x$ mit einer Exponentenpotenz gleich der ersten gemeinsamen Elementarzahl $a$ berücksichtigt wird.

7. Kryptographisches Verfahren nach einem der Ansprüche 5 oder 6, **dadurch gekennzeichnet, dass** das zweite Beweiselement $y$, modulo ein Bild des Moduls $n$, das durch eine Carmichael-Funktion $\lambda$ berechnet wird, oder modulo ein Vielfaches der Ordnung der generischen Zahl $g$, modulo der Modul $n$, berechnet wird.

8. Kryptographisches Verfahren nach einem der Ansprüche 5 oder 6, **dadurch gekennzeichnet, dass** die Zufallszahl $r$ im Sinne des mathematischen Problems des diskreten Logarithmus sehr viel höher als der Wert des privaten Schlüssels $d$ ist.

9. Kryptographisches Verfahren nach Anspruch 7, **dadurch gekennzeichnet, dass** die ganze Zufallszahl $r$ kleiner als ein Bild des Moduls $n$ berechnet durch eine Carmichael-Funktion $\lambda$ oder als ein Vielfaches der Ordnung der generischen Zahl $g$, modulo der Modul $n$, ist.

10. Kryptographisches Verfahren nach einem der Ansprüche 5 bis 9, **dadurch gekennzeichnet, dass** der erste Exponent modulo ein Bild des Moduls $n$ durch eine Carmichael-Funktion $\lambda$ oder modulo ein Vielfaches der generischen Zahl $g$ modulo der Modul $n$ berechnet wird.

11. Kryptographisches Verfahren nach einem der vorhergehenden Ansprüche, **dadurch gekennzeichnet, dass** die gemeinsame generische Zahl $g$ mit dem öffentlichen Schlüssel übertragen wird, wobei die gemeinsame generische Zahl $g$ gleich einer einfachen Zahl $G$ erhoben auf eine Potenz modulo der Modul $n$ mit als Exponent dem privaten Schlüssel $d$ ist.

12. Kryptographisches Verfahren nach einem der vorhergehenden Ansprüche, **dadurch gekennzeichnet, dass** für eine Transaktion, die außerdem eine dritte Zwischen-Entität (C) impliziert, die über die gemeinsame generische Zahl $g$ verfügt, das Verfahren nach dem Empfang des zweiten Beweiselements $y$ durch die Zwischen-Entität (C) mindestens umfasst:

- die Generierung, durch die Zwischen-Entität (C), eines dritten Beweiselements $Y$, Ergebnis einer dritten Potenz, modulo der Modul n, der gemeinsamen generischen Zahl $g$ erhoben auf die Potenz eines von dem zweiten Beweiselement $y$ gebildeten dritten Exponenten, und die Übertragung des dritten Beweiselements $Y$ an die zweite Prüfer-Entität (B);
- die Prüfung durch die zweite Prüfer-Entität (B) der Gleichheit zwischen einem Prüfwert, der das Produkt einer Potenz des dritten Beweiselements $Y$ erhoben auf die Potenz $e$ des öffentlichen Schlüsselexponenten und einer Potenz der gemeinsamen generischen Zahl $g$ erhoben auf die Potenz der gemeinsame Zahl $c$, modulo der Modul $n$, und dem ersten Beweiselement $x$ ist.

13. Beweiser-Vorrichtung (30), versehen mit einem privaten Schlüssel $d$ des Typs RSA, der geheim gehalten und vor jedem Eindringen geschützt ist, die bei einer Transaktion mit einer Prüfer-Vorrichtung einen Beweis generieren kann, derart, dass die Prüfung dieses Beweises mit Hilfe eines dem privaten Schlüssel zugeordneten öffentlichen Schlüssels durchgeführt werden kann, wobei der öffentliche Schlüssel vom Typ RSA einen öffentlichen Schlüsselexponent $e$ und einen Modul $n$ aufweist, **dadurch gekennzeichnet, dass** sie aufweist:

- Rechenmittel (37), die eingerichtet sind, um ein erstes Beweiselement $x$ insgesamt oder teilweise unabhängig von der Transaktion zu generieren, wobei das erste Beweiselement $x$ mindestens das Ergebnis einer ersten Potenz, modulo der Modul n, der gemeinsamen generischen Zahl $g$ erhoben auf die Potenz eines ersten Exponenten, der das Produkt einer Zufallszahl $r$ und des öffentlichen Schlüsselexponenten $e$ ist, umfasst, und um ein zweites Beweiselement $y$ zu generieren, das mit dem ersten Beweiselement verbunden ist und von einer für die Transaktion spezifischen gemeinsamen Zahl $c$ und von dem geheimen Schlüssel abhängt,
- Kommunikationsmittel (34), die eingerichtet sind, um mindestens das erste und das zweite Beweiselement zu senden, und eingerichtet sind, um die gemeinsame Zahl $c$ zu der Prüfer-Vorrichtung zu senden oder von ihr zu empfangen.

**14.** Beweiser-Vorrichtung (30) nach Anspruch 13, **dadurch gekennzeichnet, dass**:

- die Rechenmittel (37) einerseits eingerichtet sind, um eine erste Zufallszahl $r$ zu erzeugen, und um eine gemeinsame generische Zahl $g$ auf eine erste Potenz modulo der Modul n zu erheben, die einen ersten Exponent gleich einem Produkt aus dem öffentlichen Schlüsselexponenten $e$ und der ganzen Zufallszahl $r$ hat;
- die Rechenmittel (37) andererseits eingerichtet sind, um das zweite Beweiselement $y$ durch Differenz zwischen der ganzen Zufallszahl $r$ und dem privaten Schlüssel $d$ multipliziert mit der gemeinsamen Zahl $c$, oder, wenn die gemeinsame Zahl $c$ in zwei gemeinsame Elementarzahlen $a$ und $b$ aufgeteilt ist, durch Abziehen von der ganzen Zufallszahl $r$ multipliziert mit der ersten gemeinsamen Elementarzahl $a$ des privaten Schlüssels $d$ multipliziert mit der zweiten gemeinsame Elementarzahl $b$ zu generieren.

**15.** Beweiser-Vorrichtung (30) nach Anspruch 14, **dadurch gekennzeichnet, dass** die Rechenmittel (37) eingerichtet sind, um Operationen modulo ein Bild des Moduls $n$, berechnet durch eine Carmichael-Funktion $\lambda$, oder modulo ein Vielfaches der Ordnung der generischen Zahl $g$, modulo der Modul $n$, durchzuführen.

**16.** Prüfer-Vorrichtung (31), um zu prüfen, dass ein Beweis von einer Beweiser-Vorrichtung stammt, die mit einem privaten Schlüssel $d$ des Typs RSA versehen ist, der von der Beweiser-Vorrichtung geheim gehalten wird, mit Hilfe eines dem privaten Schlüssel zugeordneten öffentlichen Schlüssels, wobei der öffentliche Schlüssel des Typs RSA einen öffentlichen Schlüsselexponent $e$ und einen Modul $n$ aufweist, **dadurch gekennzeichnet, dass** sie aufweist:

- Kommunikationsmittel (35), die eingerichtet sind, um ein erstes Beweiselement $x$, das mindestens das Ergebnis einer ersten Potenz, modulo der Modul $n$, einer gemeinsamen generischen Zahl $g$ erhoben auf die Potenz eines ersten Exponenten umfasst, der das Produkt einer Zufallszahl $r$ und des öffentlichen Schlüsselexponenten $e$ ist, und ein zweites Beweiselement $y$ oder ein drittes Beweiselement $Y$ zu empfangen, und um eine gemeinsame Zahl $c$, die für eine Transaktion spezifisch ist, in der das erste und das zweite oder das dritte Beweiselement empfangen werden, zu empfangen oder zu senden;
- Rechenmittel (38), die für die Prüfung, zur Sicherung der Transaktion, durch diese Prüfungsvorrichtung der Wertidentität des ersten Beweiselements $x$ und eines Prüfwerts eingerichtet sind, der mindestens das Ergebnis einer zweiten Potenz, modulo der Modul $n$, der gemeinsamen generischen Zahl $g$ erhoben auf die Potenz eines zweiten Exponenten, lineare Kombination der ganzen oder eines Teils der gemeinsamen Zahl $c$ und des Produkts des öffentlichen Schlüsselexponenten $e$ und des zweiten Beweiselements $y$ umfasst.

**17.** Prüfer-Vorrichtung (31) nach Anspruch 16, **dadurch gekennzeichnet, dass** die Kommunikationsmittel eingerichtet sind, um das zweite Beweiselement $y$ zu empfangen, und dass die Rechenmittel (38) eingerichtet sind, um den ersten Exponent und die erste Potenz der gemeinsamen generischen Zahl $g$ zu berechnen.

**18.** Prüfer-Vorrichtung (31) nach Anspruch 16, **dadurch gekennzeichnet, dass** die Kommunikationsmittel eingerichtet sind, um das dritte Beweiselement $Y$ zu empfangen, und dass die Rechenmittel (38) eingerichtet sind, um das dritte Beweiselement $Y$ auf eine Potenz des öffentlichen Schlüsselexponenten $e$ zu erheben, um das Ergebnis daraus mit der gemeinsamen generischen Zahl $g$ zu multiplizieren, die auf eine Potenz erhoben ist, die als Exponent die gemeinsame Zahl $c$ hat.

**Fig.1**

A

9

$$r >> d$$
$$x := g^{er} \pmod n$$
$$x \to B$$

B

10

x

12

c

11

$$[0,t-1] \to c$$
$$c \to A$$

$$y := r - d \cdot c$$
$$y \to B$$

13

16

y

17

$$V := g^{ey+c} \pmod n$$
$$V =? x$$

**Fig.2**

A

18

$$r >> d$$
$$P := g^{e.r} \pmod{n}$$

19

$$M \rightarrow \mathcal{B}$$

23

$$x := h(P,M)$$
$$c := x$$

24

$$y := r - d{\cdot}c$$
$$(x,y) \rightarrow \mathcal{B}$$

B

25

$$M, (x,y)$$

26

$$c := x$$
$$V := g^{c+e{\cdot}y} \pmod{n}$$

$$h(V,M) =?\ x$$

**Fig.3**

Fig.4

EP 1 520 370 B1

25

**Fig.5**

A

C

B

9
```
r >> d
x := G^r (mod n)
x -> B
```

10
```
x
```

11
```
[0,t-1] -> c
c -> A
```

12
```
c
```

13
```
y := r - d . c

y -> C
```

14
```
y
```

15
```
Y := g^y (mod n)
Y -> B
```

16
```
Y
```

17
```
V := Y^e . g^c (mod n)
V =? x
```

**Fig.6**

# RÉFÉRENCES CITÉES DANS LA DESCRIPTION

**Documents brevets cités dans la description**

- FR 2716058 A

**Littérature non-brevet citée dans la description**

- **R.L. RIVEST ; A. SHAMIR ; L. ADLEMAN.** *A Method for Obtaining Digital Signatures and Public-Key Cryptosystems, Communication of ACM,* 1978, vol. 21, 120-126

- Efficient Identification and Signatures for Smart Cards. **C.P. SCHNORR.** Lecture Notes in Computer Science. Springer Verlan, 239-252